(19) Europäisches Patentamt
European Patent Office
Office européen des brevets

(11) **EP 2 752 836 A1**

(12) **EUROPEAN PATENT APPLICATION**
published in accordance with Art. 153(4) EPC

(43) Date of publication:
**09.07.2014 Bulletin 2014/28**

(51) Int Cl.:
**G09C 1/00** (2006.01)    **H04L 9/32** (2006.01)

(21) Application number: **12827599.7**

(22) Date of filing: **20.07.2012**

(86) International application number:
**PCT/JP2012/068450**

(87) International publication number:
**WO 2013/031420 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2011 JP 2011185943**

(71) Applicant: **Sony Corporation**
**Tokyo 108-0075 (JP)**

(72) Inventors:
• **HIWATARI, Harunaga**
**Tokyo 108-0075 (JP)**
• **SAKUMOTO, Koichi**
**Tokyo 108-0075 (JP)**
• **SHIRAI, Taizo**
**Tokyo 108-0075 (JP)**

(74) Representative: **Berryman, Robert Jan**
**D Young & Co LLP**
**120 Holborn**
**London EC1N 2DY (GB)**

(54) **INFORMATION PROCESSING DEVICE, SIGNATURE GENERATION DEVICE, SIGNATURE VERIFICATION DEVICE, INFORMATION PROCESSING METHOD, SIGNATURE GENERATION METHOD, AND SIGNATURE VERIFICATION METHOD**

(57) Provided is an information processing apparatus including a message generation unit configured to generate a message based on a pair of quadratic multivariate polynomials $F = (f_1, ..., f_m)$ defined in a ring K and expressed in a quadratic form and a vector s that is an element of a set $K^n$, a message supply unit configured to supply the message to a verifier storing the pair of quadratic multivariate polynomials F and vectors $y = (y_1, ..., y_m) = (f_1(s), ..., f_m(s))$, and a response supply unit configured to supply the verifier with response information corresponding to a verification pattern which the verifier selects from among k (where $k \geq 3$) verification patterns.

FIG. 8

**Description**

Technical Field

The present technology relates to an information processing apparatus, a signature generation apparatus, a signature verification apparatus, an information processing method, a signature generation method, and a signature verification method.

Background Art

With the rapid development of information processing technologies and communication technologies, documents have been digitized rapidly regardless of whether the documents are public or private. With the digitization of such documents, many individuals and companies have a considerable interest in security management of electronic documents. Countermeasures against tampering acts such as wiretapping or forgery of electronic documents have been actively studied in various fields in response to an increase in this interest. Regarding the wiretapping of electronic documents, security is ensured, for example, by encrypting the electronic documents. Further, regarding the forgery of electronic documents, security is ensured, for example, by using digital signatures. However, when the encryption or the digital signature to be used does not have high tampering resistance, sufficient security is not ensured.

The digital signature is used for specifying the author of an electronic document. Accordingly, the digital signature should be able to be generated only by the author of the electronic document. If a malicious third party is able to generate the same digital signature, such third party can impersonate the author of the electronic document. That is, an electronic document is forged by the malicious third party. Various opinions have been expressed regarding the security of the digital signature to prevent such forgery. As digital signature schemes that are currently widely used, a RSA signature scheme and a DSA signature scheme are known, for example.

The RSA signature scheme takes "difficulty of prime factorisation of a large composite number (hereinafter, prime factorisation problem)" as a basis for security. Also, the DSA signature scheme takes "difficulty of solving discrete logarithm problem" as a basis for security. These bases are based on that algorithms that efficiently solve the prime factorisation problem and the discrete logarithm problem by using a classical computer do not exist. That is, the difficulties mentioned above suggest the computational difficulty of a classical computer. However, it is said that solutions to the prime factorisation problem and the discrete logarithm problem can be efficiently calculated when a quantum computer is used.

Similarly to the RSA signature scheme and the DSA signature scheme, many of the digital signature schemes and public-key authentication schemes that are currently used also take difficulty of the prime factorisation problem or the discrete logarithm problem as a basis for security. Thus, if the quantum computer is put to practical use, security of such digital signature schemes and public-key authentication schemes will not be ensured. Accordingly, realizing new digital signature schemes and public-key authentication schemes is desired that take as a basis for security a problem different from problems such as the prime factorisation problem and the discrete logarithm problem that can be easily solved by the quantum computer. As a problem which is not easily solved by the quantum computer, there is a problem related to a multivariate polynomial, for example.

For example, as digital signature schemes that take the multivariate polynomial problem as a basis for security, those based on Matsumoto-Imai (MI) cryptography, Hidden Field Equation (HFE) cryptography, Oil-Vinegar (OV) signature scheme, and Tamed Transformation Method (TTM) cryptography are known. For example, a digital signature scheme based on the HFE is disclosed in the following non-patent literatures 1 and 2.

Citation List

Non-Patent Literature

Non-Patent Literature 1: Jacques Patarin, Asymmetric Cryptography with a Hidden Monomial, CRYPTO 1996, pp. 45-60
Non-Patent Literature 2: Patarin, J., Courtois, N., and Goubin, L., QUARTZ, 128-Bit Long Digital Signatures, In Naccache, D., Ed. Topics in Cryptology - CT-RSA 2001 (San Francisco, CA, USA, April 2001), vol. 2020 of Lecture Notes in Computer Science, Springer-Verlag., pp.282-297.

Summary of Invention

Technical Problem

As described above, the multivariate polynomial problem is an example of a problem called NP-hard problem which is difficult to solve even when using the quantum computer. Normally, a public-key authentication scheme that uses the multivariate polynomial problem typified by the HFE or the like uses a multi-order multivariate simultaneous equation with a special trapdoor. For example, a multi-order multivariate simultaneous equation $F(x_1,...,x_n) = y$ related to $x_1, ..., x_n$, and linear transformations A and B are provided, and the linear transformations A and B are secretly managed. In this case, the multi-order multivariate simultaneous equation F and the linear transformations A and B are the trapdoors.

An entity that knows the trapdoors F, A, and B can solve an equation $B(F(A(x_1,...,x_n))) = y'$ related to $x_1, ..., x_n$. On the other hand, the equation $B(F(A(x_1,...,x_n))) = y'$ related to $x_1, ..., x_n$ is not solved by an entity that does not know the trapdoors F, A, and B. By using this mechanism, a public-key authentication scheme and a digital signature scheme that take the difficulty of solving a multi-order multivariate simultaneous equation as a basis for security can be realized.

As mentioned above, in order to realize the public-key authentication scheme or the digital signature scheme, it is necessary to prepare a special multi-order multivariate simultaneous equation satisfying $B(F(A(x_1,...,x_n))) = y$. Further, at the time of the signature generation, it is necessary to solve the multi-order multivariate simultaneous equation F. For this reason, the available multi-order multivariate simultaneous equation F has been limited to relatively easily soluble equations. That is, in the past schemes, only a multi-order multivariate simultaneous equation $B(F(A(x_1,...,x_n))) = y$ of a combined form of three functions (trapdoors) B, F, and A that can be relatively easily solved has been used, and thus it is difficult to ensure sufficient security.

The present technology is devised in view of the above-mentioned circumstance and is intended to provide a novel and improved information processing apparatus, a novel and improved signature generation apparatus, a novel and improved information processing method, a novel and improved signature generation method, and a novel and improved program capable of realizing a public-key authentication scheme and a digital signature scheme that are efficient and have high security using a multi-order multivariate simultaneous equation for which a means of efficient solving (trapdoor) is not known.

Solution to Problem

According to an embodiment of the present technology, there is provided an information processing apparatus including a message generation unit configured to generate a message based on a pair of quadratic multivariate polynomials $F = (f_1, ..., f_m)$ defined in a ring K and expressed in a quadratic form and a vector s that is an element of a set $K^n$, a message supply unit configured to supply the message to a verifier storing the pair of quadratic multivariate polynomials F and vectors $y = (y_1, ..., y_m) = (f_1(s), ..., f_m(s))$, and a response supply unit configured to supply the verifier with response information corresponding to a verification pattern which the verifier selects from among k (where $k \geq 3$) verification patterns. The vector s is a secret key. The pair of quadratic multivariate polynomials F and the vectors y are public keys. The message is information obtained by executing calculation prepared in advance for the verification pattern corresponding to the response information based on the public keys and the response information. When the message is generated, the message generation unit executes calculation of a function $G = (g_1, g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where $l = 1$ to m and $A_l$ is an n x n coefficient matrix).

According to another embodiment of the present technology, there is provided an information processing apparatus including an information storage unit configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$, a message acquisition unit configured to acquire a message generated based on the pair of quadratic multivariate polynomials F and a vector s that is an element of a set $K^n$, a pattern information supply unit configured to supply a prover supplying the message with information on one verification pattern randomly selected from among k (where $k \geq 3$) verification patterns, a response acquisition unit configured to acquire response information corresponding to the selected verification pattern from the prover, and a verification unit configured to verify whether or not the prover stores the vector s based on the message, the pair of quadratic multivariate polynomials F, the vectors y, and the response information. The vector s is a secret key. The pair of quadratic multivariate polynomials F and the vectors y are public keys. The message is information obtained by executing calculation prepared in advance for the verification pattern corresponding to the response information based on the public keys and the response information. The message used for the verification is reproduced, the verification unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where $l = 1$ to m and $A_l$ is an n x n coefficient matrix).

According to another embodiment of the present technology, there is an information processing apparatus including a message generation unit configured to generate a message based on a pair of quadratic multivariate polynomials $F = (f_1, ..., f_m)$ defined in a ring K and expressed in a quadratic form and a vector s that is an element of a set $K^n$, a message supply unit configured to supply the message to a verifier storing the pair of quadratic multivariate polynomials F and vectors $y = (y_1, ..., y_m) = (f_1(s), ..., f_m(s))$, an intermediate information generation unit configured to generate third information using first information randomly selected by the verifier and second information obtained at a time of generation of the message, an intermediate information supply unit configured to supply the third information to the verifier, and a response supply unit configured to supply the verifier with response information corresponding to a verification pattern which the verifier selects from among k (where $k \geq 2$) verification patterns. The vector s is a secret key. The pair of multi-order multivariate polynomials F and the vectors y are public keys. The message is information obtained by executing calculation prepared in advance for the verification pattern corresponding to the response information based on the public keys, the first information, the third information, and the response information. When the message is generated, the message generation unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where l = 1 to m and $A_l$ is an n x n coefficient matrix).

According to another embodiment of the present technology, there is an information processing apparatus including an information storage unit configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$, a message acquisition unit configured to acquire a message generated based on the pair of quadratic multivariate polynomials F and a vector s that is an element of a set $K^n$, an information supply unit configured to supply the prover supplying the message with the randomly selected first information, an intermediate information acquisition unit configured to acquire third information which the prover generates based on the first information and second information obtained at a time of the generation of the message, a pattern information supply unit configured to supply the prover with information on one verification pattern randomly selected from among k (where $k \geq 3$) verification patterns, a response acquisition unit configured to acquire response information corresponding to the selected verification pattern from the prover, and a verification unit configured to verify whether or not the prover stores the vector s based on the message, the first information, the third information, the pair of quadratic multivariate polynomials F, and the response information. The vector s is a secret key. The pair of quadratic multivariate polynomials F and the vectors y are public keys. The message is information obtained by executing calculation prepared in advance for the verification pattern corresponding to the response information based on the public keys, the first information, the third information, and the response information. The message is information obtained by executing calculation prepared in advance for a verification pattern corresponding to the response information based on the public keys and the response information. When the message used for the verification is reproduced, the verification unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where l = 1 to m and $A_l$ is an n x n coefficient matrix).

According to another embodiment of the present technology, there is a signature generation apparatus including a signature generation unit configured to generate a digital signature for a document M based on a pair of quadratic multivariate polynomials $F = (f_1, ..., f_m)$ defined in a ring K and expressed in a quadratic form and a signature key s that is an element of a set $K^n$, and a signature supply unit configured to supply the digital signature to a verifier storing the pair of quadratic multivariate polynomials F and vectors $y = (f_1(s), ..., f_m(s))$. The signature generation unit executes calculation of a function $G = (g_1, ..., g_m)$ defined as $G(x_1, x_2) = F(x_1 + x_2) - F(x_1) - F(x_2)$ executed during the generation of the digital signature based on a formula $g_l(x_1, x_2) = x_1^T A_l x_2 + x_2^T A_l x_1$ (where l = 1 to m and $A_l$ is an n x n coefficient matrix).

According to another embodiment of the present technology, there is a signature verification apparatus including an information storage unit configured to store a pair of quadratic multivariate polynomials $F = (f_1, ..., f_m)$ defined in a ring K and expressed in a quadratic form and vectors $y = (f_1(s), ..., f_m(s))$, and a signature verification unit configured to verify legitimacy of a document M based on a digital signature generated using the quadratic multivariate polynomials F and a signature key s that is an element of a set $K^n$ with respect to the document M. The signature verification unit executes calculation of a function $G = (g_1, ..., g_m)$ defined as $G(x_1, x_2) = F(x_1 + x_2) - F(x_1) - F(x_2)$ executed during the verification of the digital signature based on a formula $g_l(x_1, x_2) = x_1^T A_l x_2 + x_2^T A_l x_1$ (where l = 1 to m and $A_l$ is an n x n coefficient matrix).

According to another embodiment of the present technology, there is an information processing method including a step of generating a message based on a pair of quadratic multivariate polynomials $F = (f_1, ..., f_m)$ defined in a ring K and expressed in a quadratic form and a vector s that is an element of a set $K^n$, a step of supplying the message to a verifier storing the pair of quadratic multivariate polynomials F and vectors $y = (y_1, ..., y_m) = (f_1(s), ..., f_m(s))$, and a step of supplying the verifier with response information corresponding to a verification pattern which the verifier selects from among k (where $k \geq 3$) verification patterns. The vector s is a secret key. The pair of quadratic multivariate polynomials F and the vectors y are public keys. The message is information obtained by executing calculation prepared in advance for the verification pattern corresponding to the response information based on the public keys and the response information. In the step of generating the message, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where l = 1 to m and $A_l$ is an n x n coefficient matrix) when the message is generated.

According to another embodiment of the present technology, there is an information processing method executed by an information processing apparatus configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$, the information processing method including a step of acquiring a message generated based on the pair of quadratic multivariate polynomials F and a vector s that is an element of a set $K^n$, a step of supplying a prover supplying the message with information on one verification pattern randomly selected from among k (where $k \geq 3$) verification patterns, a step of acquiring response information corresponding to the selected verification pattern from the prover, and a step of verifying whether or not the prover stores the vector s based on the message, the pair of quadratic multivariate polynomials F, the vectors y, and the response information. The vector s is a secret key. The pair of quadratic multivariate polynomials F and the vectors y are public keys. The message is information obtained by executing calculation prepared in advance for the verification pattern corresponding to the response information based on the public keys and the response information. In the step of verifying whether or not the prover stores the vector s, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1{}^T A_l x_2 + x_2{}^T A_l x_1$ (where $l = 1$ to m and $A_l$ is an n x n coefficient matrix) when the message used for the verification is reproduced.

According to another embodiment of the present technology, there is an information processing method including a step of generating a message based on a pair of quadratic multivariate polynomials $F = (f_1, ..., f_m)$ defined in a ring K and expressed in a quadratic form and a vector s that is an element of a set $K^n$, a step of supplying the message to a verifier storing the pair of quadratic multivariate polynomials F and vectors $y = (y_1, ..., y_m) = (f_1(s), ..., f_m(s))$, a step of generating third information using first information randomly selected by the verifier and second information obtained at a time of generation of the message, a step of supplying the third information to the verifier, and a step of supplying the verifier with response information corresponding to a verification pattern which the verifier selects from among k (where $k \geq 2$) verification patterns. The vector s is a secret key. The pair of multi-order multivariate polynomials F and the vectors y are public keys. The message is information obtained by executing calculation prepared in advance for the verification pattern corresponding to the response information based on the public keys, the first information, the third information, and the response information. In the step of generating the message, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1{}^T A_l x_2 + x_2{}^T A_l x_1$ (where $l = 1$ to m and $A_l$ is an n x n coefficient matrix) when the message is generated.

According to another embodiment of the present technology, there is an information processing method executed by an information processing apparatus configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$, the information processing method including a step of acquiring a message generated based on the pair of quadratic multivariate polynomials F and a vector s that is an element of a set $K^n$, a step of supplying the prover supplying the message with the randomly selected first information, a step of acquiring third information which the prover generates based on the first information and second information obtained at a time of the generation of the message, a step of supplying the prover with information on one verification pattern randomly selected from among k (where $k \geq 3$) verification patterns, a step of acquiring response information corresponding to the selected verification pattern from the prover, and a step of verifying whether or not the prover stores the vector s based on the message, the first information, the third information, the pair of quadratic multivariate polynomials F, and the response information. The vector s is a secret key. The pair of quadratic multivariate polynomials F and the vectors y are public keys. The message is information obtained by executing calculation prepared in advance for the verification pattern corresponding to the response information based on the public keys, the first information, the third information, and the response information. The message is information obtained by executing calculation prepared in advance for a verification pattern corresponding to the response information based on the public keys and the response information. In the step of verifying whether or not the prover stores the vector s, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1{}^T A_l x_2 + x_2{}^T A_l x_1$ (where $1 = 1$ to m and $A_l$ is an n x n coefficient matrix) when the message used for the verification is reproduced.

According to another embodiment of the present technology, there is a signature generation method including a step of generating a digital signature for a document M based on a pair of quadratic multivariate polynomials $F = (f_1, ..., f_m)$ defined in a ring K and expressed in a quadratic form and a signature key s that is an element of a set $K^n$, and a step of supplying the digital signature to a verifier storing the pair of quadratic multivariate polynomials F and vectors $y = (f_1(s), ..., f_m(s))$. In the step of generating the digital signature, calculation of a function $G = (g_1, ..., g_m)$, which is defined as $G(x_1, x_2) = F(x_1 + x_2) - F(x_1) - F(x_2)$, executed during the generation of the digital signature is executed based on a formula $g_l(x_1, x_2) = x_1{}^T A_l x_2 + x_2{}^T A_l x_1$ (where $l = 1$ to m and $A_l$ is an n x n coefficient matrix).

According to another embodiment of the present technology, there is a signature verification method executed by an information processing apparatus configured to store a pair of quadratic multivariate polynomials $F = (f_1, ..., f_m)$ defined in a ring K and expressed in a quadratic form and vectors $y = (f_1(s), ..., f_m(s))$, the signature verification method including a step of verifying legitimacy of a document M based on a digital signature generated using the quadratic multivariate polynomials F and a signature key s that is an element of a set $K^n$ with respect to the document M. In the step of verifying the legitimacy, calculation of a function $G = (g_1, ..., g_m)$, which is defined as $G(x_1, x_2) = F(x_1 + x_2) - F(x_1) - F(x_2)$, executed during the generation of the digital signature is executed based on a formula $g_l(x_1, x_2) = x_1^T A_l x_2 + x_2^T A_l x_1$ (where l = 1 to m and $A_l$ is an n x n coefficient matrix).

According to another embodiment of the present technology, there is provided a computer-readable recording medium having the above-mentioned programs recorded thereon.

According to an embodiment of the present technology, there is provided a computer-readable recording medium having the above-mentioned programs recorded thereon.

Advantageous Effects of Invention

According to the present technology described above, it is possible to realize a public-key authentication scheme and a digital signature scheme that are efficient and have high security using a multi-order multivariate simultaneous equation for which efficiently solving means (trapdoor) is not known.

Brief Description of Drawings

[FIG. 1] FIG. 1 is an explanatory diagram for describing an algorithm structure related to a public-key authentication scheme.

[FIG. 2] FIG. 2 is an explanatory diagram for describing an algorithm structure related to a digital signature scheme.

[FIG. 3] FIG. 3 is an explanatory diagram for describing an algorithm structure related to an n-pass public-key authentication scheme.

[FIG. 4] FIG. 4 is an explanatory diagram for describing an efficient algorithm related to the 3-pass public-key authentication scheme.

[FIG. 5] FIG. 5 is an explanatory diagram for describing parallelization of efficient algorithms related to the 3-pass public-key authentication scheme.

[FIG. 6] FIG. 6 is an explanatory diagram for describing an example of an efficient algorithm related to the 5-pass public-key authentication scheme.

[FIG. 7] FIG. 7 is an explanatory diagram for describing parallelization of efficient algorithms related to the 5-pass public-key authentication scheme.

[FIG. 8] FIG. 8 is an explanatory diagram for describing a method of modifying an efficient algorithm related to the 3-pass public-key authentication scheme into an algorithm of a digital signature scheme.

[FIG. 9] FIG. 9 is an explanatory diagram for describing a method of modifying an efficient algorithm related to the 5-pass public-key authentication scheme into an algorithm of the digital signature scheme.

[FIG. 10] FIG. 10 is an explanatory diagram for describing a hardware configuration example of an information processing apparatus capable of executing the algorithm according to each embodiment of the present technology.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

[Flow of Description]

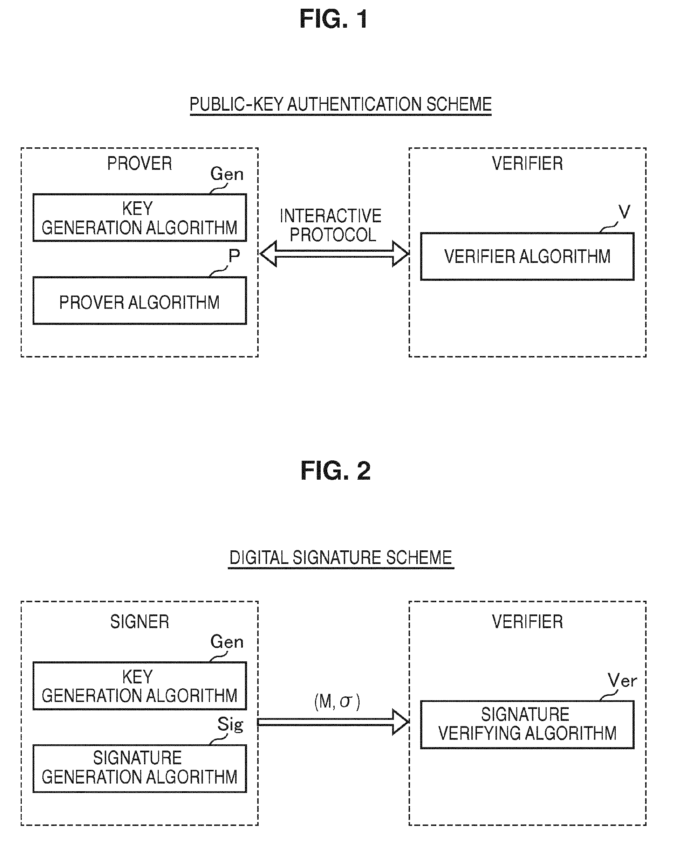

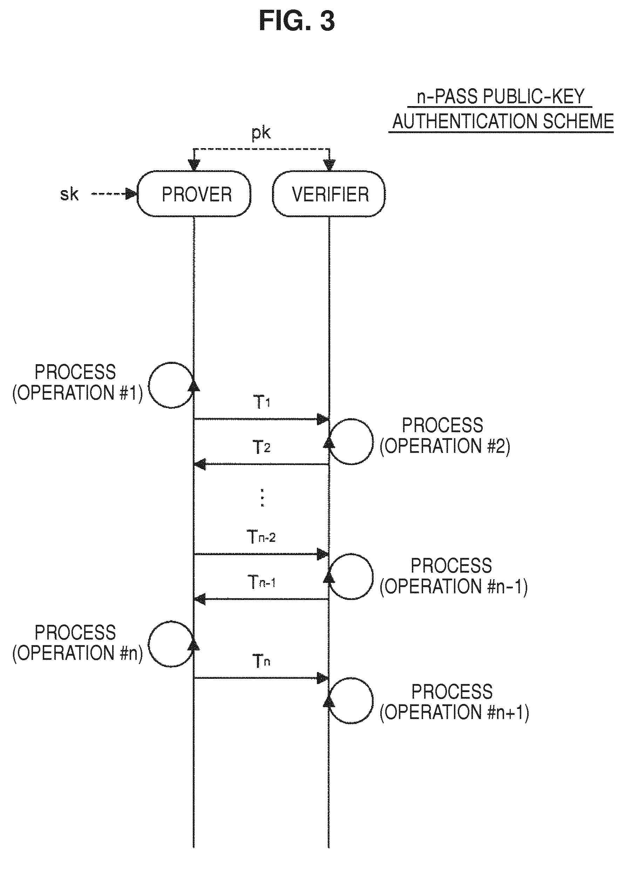

Here, a flow of the description of embodiments of the present technology to be made below will be briefly described. First, an algorithm structure of a public-key authentication scheme will be described with reference to FIG. 1. Next, an algorithm structure of a digital signature scheme will be described with reference to FIG. 2. Next, an n-pass public-key authentication scheme will be described with reference to FIG. 3.

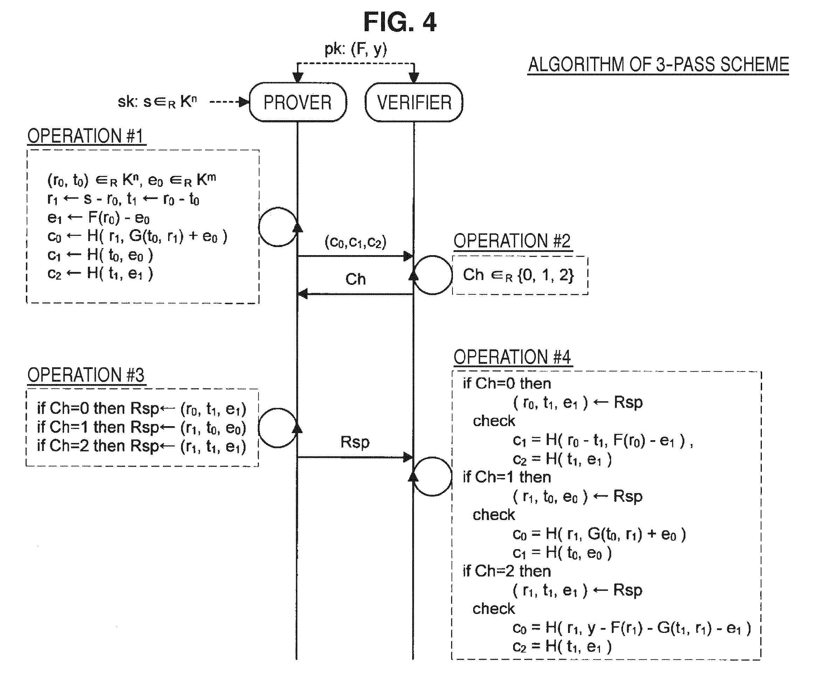

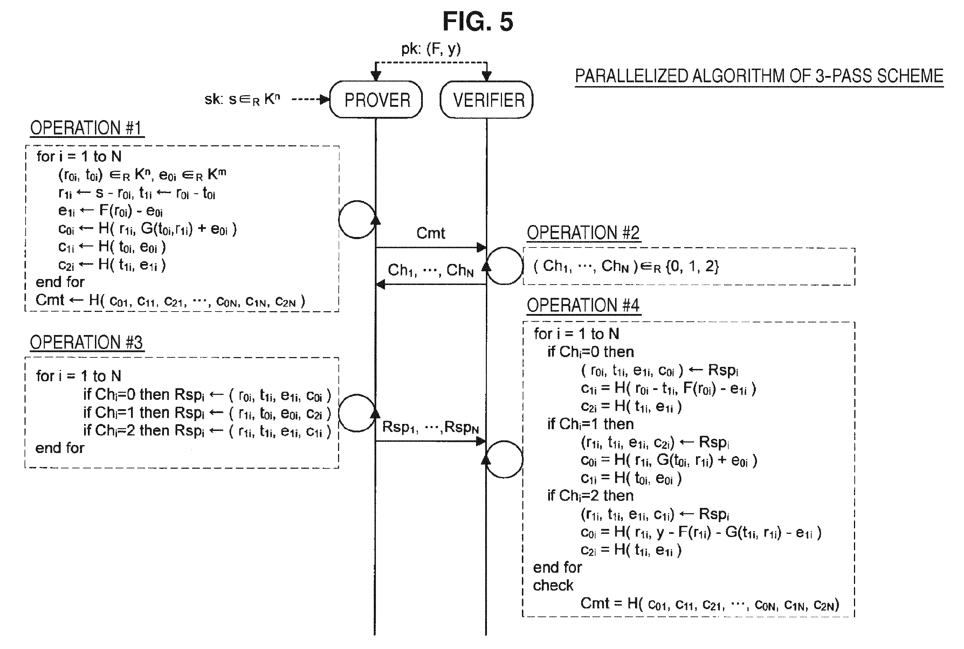

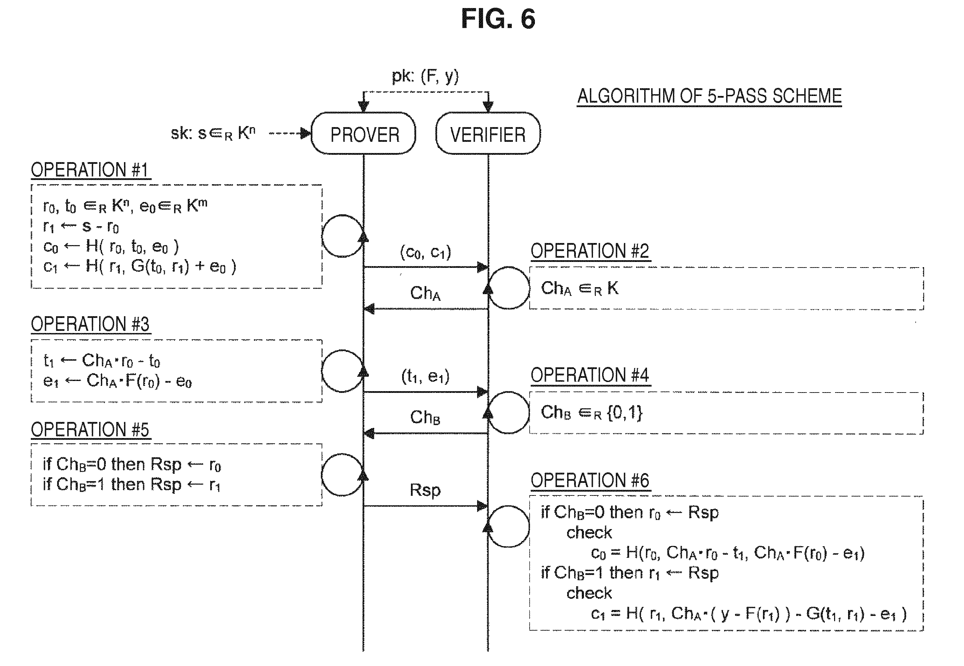

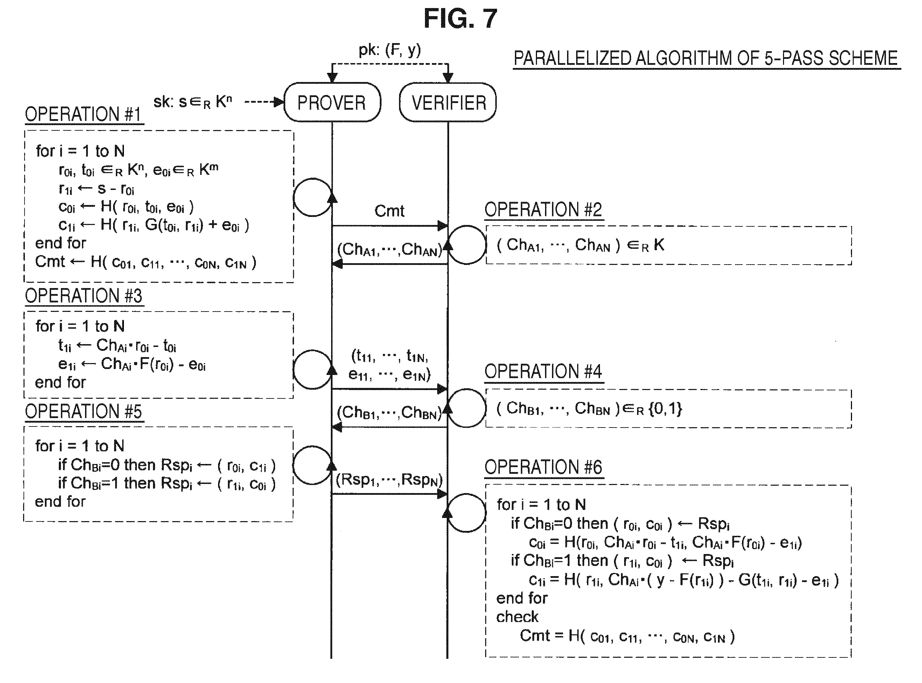

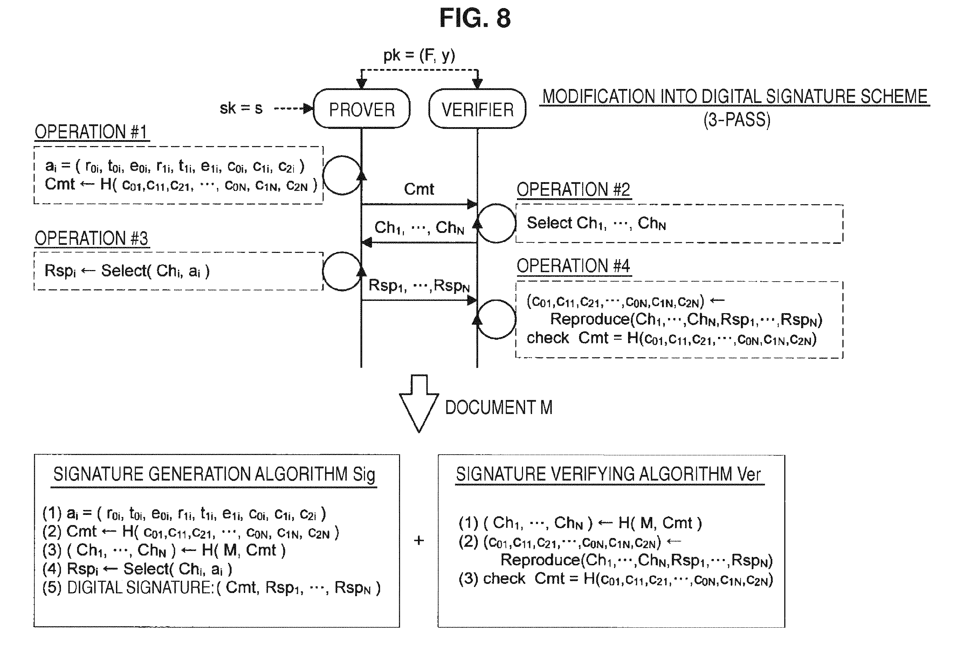

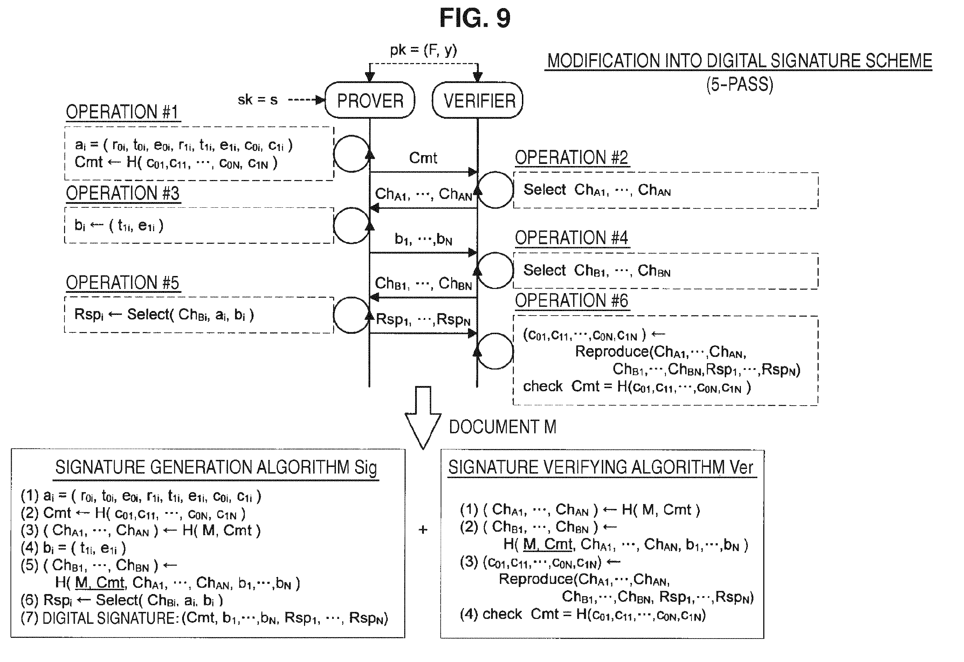

Next, an example of an algorithm structure related to a 3-pass public-key authentication scheme will be described with reference to FIGS. 4 and 5. Next, an example of an algorithm structure related to a 5-pass public-key authentication scheme will be described with reference to FIGS. 6 and 7. Next, a method of modifying the efficient algorithms related to the 3-pass and 5-pass public-key authentication schemes into algorithms of the digital signature scheme will be described with reference to FIGS. 8 and 9.

Subsequently, a hardware configuration example of an information processing apparatus capable of realizing each algorithm according to the first and second embodiments of the present technology will be described with reference to FIG. 10. Finally, a summary of the technical spirit of the present embodiments and operational advantageous effects obtained from the technical spirit will be described in brief.

(Detailed Articles)

1. Introduction

    1-1: Algorithm of Public-key Authentication Scheme
    1-2: Algorithms for Digital Signature Scheme
    1-3: N-pass Public-key Authentication Scheme

2. Algorithm Structures Related to 3-pass Public-key Authentication Scheme

    2-1: Example of Specific Algorithm Structure
    2-2: Example of Parallelized Algorithm Structure

3 Algorithm Structure Related to 5-pass Public-key Authentication Scheme

    3-1: Example of Specific Algorithm Structure (FIG. 6)
    3-2: Example of Parallelized Algorithm Structure (FIG. 7)

4: Modification of Digital Signature Scheme

    4-1: Modification of 3-pass Public-key Authentication Scheme into Digital Signature Scheme
    4-2: Modification of 5-pass Public-key Authentication Scheme into Digital Signature Scheme

5: 5: Efficient Calculation Method For Bilinear Term G

    5-1: Description of Principle
    5-2: Application Example #1 (Application to 3-pass Scheme)
    5-3: Application Example #2 (Application to 5-pass Scheme)
    5-4: Application Example #3 (Application to Digital Signature Scheme)

6: Example of Hardware Configuration
7: Summary

<1. Introduction>

The embodiments herein relate to a public-key authentication scheme and a digital signature scheme that base their safety on the difficulty of solving multi-order multivariate simultaneous equations. However, the embodiments herein differ from techniques of the related art such as HFE digital signature schemes, and relate to a public-key authentication scheme and a digital signature scheme that utilize multi-order multivariate simultaneous equations that lack a means of efficient solving (trapdoors). First, algorithms for a public-key authentication scheme, algorithms for a digital signature scheme, and an n-pass public-key authentication scheme will be briefly summarized.

[1-1: Algorithm of Public-Key Authentication Scheme]

First, an overview of algorithm of a public-key authentication scheme will be described with reference to FIG. 1. FIG. 1 is an explanatory diagram for describing an algorithm structure of a public-key authentication scheme.

A public-key authentication is used when a person (prover) convinces another person (verifier) that she is the prover herself by using a public key pk and a secret key sk. For example, a public key $pk_A$ of a prover A is made known to the verifier B. On the other hand, a secret key $sk_A$ of the prover A is secretly managed by the prover A. According to the public-key authentication scheme, a person who knows the secret key $sk_A$ corresponding to the public key $pk_A$ is regarded as the prover A herself.

In order for the prover A to prove to the verifier B that she is the prover A herself using the public-key authentication setup, the prover A, via a interactive protocol, presents proof to the verifier B indicating that she knows the secret key

$sk_A$ corresponding to the public key $pk_A$. The proof indicating the prover A knows the secret key $sk_A$ is then presented to verifier B, and in the case where the verifier B is able to confirm that proof, the validity of the prover A (the fact that the prover A is herself) is proven.

However, a public-key authentication setup demands the following conditions in order to ensure safety.

The first condition is "to lower as much as possible the probability of falsification being established, at the time the interactive protocol is performed, by a falsifier not having the secret key sk". That this first condition is satisfied is called "soundness." In other words, the soundness means that "falsification is not established during the execution of an interactive protocol by a falsifier not having the secret key sk with a non-negligible probability". The second condition is that, "even if the interactive protocol is performed, information on the secret key $sk_A$ of the prover A is not at all leaked to the verifier B". That this second condition is satisfied is called "zero knowledge."

Conducting public-key authentication safely involves using an interactive protocol exhibiting both soundness and zero-knowledge. If an authentication process were hypothetically conducted using an interactive protocol lacking soundness and zero-knowledge, there would be a definite chance of false verification and a definite chance of the divulgence of secret key information, and thus the validity of the prover would not be proven even if the process itself is completed successfully. Consequently, the question of how to ensure the soundness and zero-knowledge of a session protocol is important.

(Model)

In a model of the public-key authentication scheme, two entities, namely a prover and a verifier, are present, as shown in FIG. 1. The prover generates a pair of public key pk and secret key sk unique to the prover by using a key generation algorithm Gen. Then, the prover performs an interactive protocol with the verifier by using the pair of secret key sk and public key pk generated by using the key generation algorithm Gen. At this time, the prover performs the interactive protocol by using a prover algorithm P. As described above, in the interactive protocol, the prover proves to the verifier, by using the prover algorithm P, that she possesses the secret key sk.

On the other hand, the verifier performs the interactive protocol by using a verifier algorithm V, and verifies whether or not the prover possesses the secret key corresponding to the public key that the prover has published. That is, the verifier is an entity that verifies whether or not a prover possesses a secret key corresponding to a public key. As described, a model of the public-key authentication scheme is configured from two entities, namely the prover and the verifier, and three algorithms, namely the key generation algorithm Gen, the prover algorithm P and the verifier algorithm V.

Additionally, expressions "prover" and "verifier" are used in the following description, but these expressions strictly mean entities. Therefore, the subject that performs the key generation algorithm Gen and the prover algorithm P is an information processing apparatus corresponding to the entity "prover". Similarly, the subject that performs the verifier algorithm V is an information processing apparatus. The hardware configuration of these information processing apparatuses is as shown in FIG. 10, for example. That is, the key generation algorithm Gen, the prover algorithm P, and the verifier algorithm V are performed by a CPU 902 based on a program recorded on a ROM 904, a RAM 906, a storage unit 920, a removable recording medium 928, or the like.

(Key Generation Algorithm Gen)

The key generation algorithm Gen is used by a prover. The key generation algorithm Gen is an algorithm for generating a pair of public key pk and secret key sk unique to the prover. The public key pk generated by the key generation algorithm Gen is published. Furthermore, the published public key pk is used by the verifier. On the other hand, the secret key sk generated by the key generation algorithm Gen is secretly managed by the prover. The secret key sk that is secretly managed by the prover is used to prove to the verifier of possession of the secret key sk corresponding to the public key pk by the prover. Formally, the key generation algorithm Gen is represented as formula (1) below as an algorithm that takes security parameter $1\lambda$ ($\lambda$ is an integer of 0 or more) as an input and outputs the secret key sk and the public key pk.

[Math 1]

$$(sk, pk) \leftarrow Gen(1^\lambda)$$

$$\cdots (1)$$

(Prover Algorithm P)

The prover algorithm P is used by a prover. The prover algorithm P is an algorithm for proving to the verifier that the prover possesses the secret key sk corresponding to the public key pk. In other words, the prover algorithm P is an algorithm that takes the public key pk and the secret key sk as inputs and performs the interactive protocol.

(Verifier Algorithm V)

The verifier algorithm V is used by the verifier. The verifier algorithm V is an algorithm that verifies whether or not the prover possesses the secret key sk corresponding to the public key pk during the session protocol. The verifier algorithm V is an algorithm that accepts a public key pk as input, and outputs 0 or 1 (1 bit) according to the execution results of the session protocol. At this point, the verifier decides that the prover is invalid in the case where the verifier algorithm V outputs 0, and decides that the prover is valid in the case where the verifier algorithm V outputs 1. Formally, the verifier algorithm V is expressed as in the following formula (2).

[Math 2]

$$0/1 \leftarrow V(pk)$$
$$\cdots (2)$$

As above, realizing meaningful public-key authentication involves having the interactive protocol satisfy the two conditions of soundness and zero-knowledge. However, proving that the prover possesses the secret key sk involves the prover executing a procedure dependent on the secret key sk, and after notifying the verifier of the result, causing the verifier to execute verification based on the content of the notification. The procedure dependent on the secret key sk is executed to ensure soundness. At the same time, no information about the secret key sk should be revealed to the verifier. For this reason, the above key generation algorithm Gen, prover algorithm P, and verifier algorithm V are skillfully designed to satisfy these requirements.

The foregoing thus summarizes the algorithms in a public-key authentication scheme.

[1-2: Algorithms for Digital Signature Scheme]

Next, algorithms for a digital signature scheme will be summarized with reference to FIG. 2. FIG. 2 is an explanatory diagram summarizing algorithms for a digital signature scheme.

Unlike paper documents, it is not possible to physically sign or affix a seal to digitized data. For this reason, proving the creator of digitized data involves an electronic setup yielding effects similarly to physically signing or affixing a seal to a paper document. This setup is digital signatures. A digital signature refers to a setup that associates given data with signature data known only to the creator of the data, provides the signature data to a recipient, and verifies that signature data on the recipient's end.

(Model)

As illustrated in FIG. 2, the two identities of signer and verifier exist in a model of a digital signature scheme. In addition, the model of a digital signature scheme is made up of three algorithms: a key generation algorithm Gen, a signature generation algorithm Sig, and a signature verifying algorithm Ver.

The signer uses the key generation algorithm Gen to generate a paired signature key sk and verification key pk unique to the signer. The signer also uses the signature generation algorithm Sig to generate a digital signature q to attach to a message M. In other words, the signer is an entity that attaches a digital signature to a message M. Meanwhile, the verifier uses the signature verifying algorithm Ver to verify the digital signature attached to the message M. In other words, the verifier is an entity that verifies the digital signature q in order to confirm whether or not the creator of the message M is the signer.

Note that although the terms "signer" and "verifier" are used in the description hereinafter, these terms ultimately mean entities. Consequently, the agent that executes the key generation algorithm Gen and the signature generation algorithm Sig is an information processing apparatus corresponding to the "signer" entity. Similarly, the agent that executes the signature verifying algorithm Ver is an information processing apparatus. The hardware configuration of these information processing apparatus is as illustrated in FIG. 10, for example. In other words, the key generation algorithm Gen, the signature generation algorithm Sig, and the signature verifying algorithm Ver are executed by a device such as a CPU 902 on the basis of a program recorded onto a device such as ROM 904, RAM 906, a storage unit 920, or a removable recording medium 928.

(Key Generation Algorithm Gen)

The key generation algorithm Gen is used by the signer. The key generation algorithm Gen is an algorithm that generates a paired signature key sk and verification key pk unique to the signer. The verification key pk generated by the key generation algorithm Gen is made public. Meanwhile, the signer keeps the signature key sk generated by the key generation algorithm Gen a secret. The signature key sk is then used to generate digital signature q to attach to a message M. For example, the key generation algorithm Gen accepts a security parameter 1p (where p is an integer equal to or greater than 0) as input, and outputs a signature key sk and a verification key pk. In this case, the key generation algorithm Gen may be expressed formally as in the following formula (3).
[Math 3]

$$(sk, pk) \leftarrow Gen(1^{\lambda})$$
$$\cdots (3)$$

(Signature Generation Algorithm Sig)

The signature generation algorithm Sig is used by the signer. The signature generation algorithm Sig is an algorithm that generates a digital signature q to be attached to a message M. The signature generation algorithm Sig is an algorithm that accepts a signature key sk and a message M as input, and outputs a digital signature q. The signature generation algorithm Sig may be expressed formally as in the following formula (4).
[Math 4]

$$\sigma \leftarrow Sig(sk, M)$$
$$\cdots (4)$$

(Signature Verifying Algorithm Ver)

The signature verifying algorithm Ver is used by the verifier. The signature verifying algorithm Ver is an algorithm that verifies whether or not the digital signature q is a valid digital signature for the message M. The signature verifying algorithm Ver is an algorithm that accepts a signer's verification key pk, a message M, and a digital signature q as input, and outputs 0 or 1 (1 bit). The signature verifying algorithm Ver may be expressed formally as in the following formula (5). At this point, the verifier decides that the digital signature q is invalid in the case where the signature verifying algorithm Ver outputs 0 (the case where the verification key pk rejects the message M and the digital signature q), and decides that the digital signature q is valid in the case where the signature verifying algorithm Ver outputs 1 (the case where the verification key pk accepts the message M and the digital signature q).
[Math 5]

$$0/1 \leftarrow Ver(pk, M, \sigma)$$
$$\cdots (5)$$

The foregoing thus summarizes the algorithms in a digital signature scheme.

[1-3: N-pass Public-key Authentication Scheme]

Next, an n-pass public-key authentication scheme will be described with reference to FIG. 3. FIG. 3 is an explanatory diagram illustrating an n-pass public-key authentication scheme.

As above, a public-key authentication scheme is an authentication scheme that proves to a verifier that a prover possesses a secret key sk corresponding to a public key pk during an interactive protocol. In addition, the interactive protocol has to satisfy the two conditions of soundness and zero-knowledge. For this reason, during the interactive protocol both the prover and the verifier exchange information n times while executing respective processes, as illustrated in FIG. 3.

In the case of an n-pass public-key authentication scheme, the prover executes a process using the prover algorithm P (operation #1), and transmits information $T_1$ to the verifier. Subsequently, the verifier executes a process using the verifier algorithm V (operation #2), and transmits information $T_2$ to the prover. This execution and processes and transmission of information $T_k$ is successively conducted for k = 3 to n, and lastly, a process (operation #n+1) is executed. Transmitting and receiving information n times in this way is thus called an "n-pass" public-key authentication scheme.

The foregoing thus describes an n-pass public-key authentication scheme.

<2. Algorithm Structures Related to 3-pass Public-key Authentication Scheme>

Hereinafter, algorithms related to a 3-pass public-key authentication scheme will be described. Note that in the following description, a 3-pass public-key authentication scheme may also be referred to as a "3-pass scheme" in some cases.

[2-1: Example of Specific Algorithm Structure (FIG. 4)]

First, an example of a specific algorithm structure related to the 3-pass scheme will be introduced with reference to FIG. 4. FIG. 4 is an explanatory diagram for describing a specific algorithm structure related to the 3-pass scheme. Here, a case in which a pair of quadratic polynomials $(f_1(x), ..., f_m(x))$ are used as a part of the public key pk will be described. Here, a quadratic polynomial $f_i(x)$ is assumed to be expressed as in the following formula (6). Also, a vector $(x_1, ..., x_n)$ is represented as x and a pair of quadratic multivariate polynomials $(f_1(x), ..., f_m(x))$ are represented as multivariate polynomials F(x).
[Math 6]

$$f_i(x_1, \cdots, x_n) = \sum_{j,k} a_{ijk} x_j x_k + \sum_j b_{ij} x_j$$

$$\cdots \ (6)$$

Also, the pair of quadratic polynomials $(f_1(x), ..., f_m(x))$ can be expressed as in the following formula (7). Also, $A_1, ..., A_m$ is an n x n matrix. Further, each of $b_1, ..., b_m$ is an n x 1 vector.
[Math 7]

$$F(x) = \begin{pmatrix} f_1(x) \\ \vdots \\ f_m(x) \end{pmatrix} = \begin{pmatrix} x^T A_1 x + b_1^T x \\ \vdots \\ x^T A_m x + b_m^T x \end{pmatrix}$$

$$\cdots \ (7)$$

When this expression is used, a multivariate polynomial F can be expressed as in the following formula (8) and formula (9). From the following formula (10), it can easily be confirmed that this expression is satisfied.
[Math 8]

$$F(x + y) = F(x) + F(y) + G(x, y)$$

$$\cdots \ (8)$$

$$G(x, y) = \begin{pmatrix} y^T (A_1^T + A_1)x \\ \vdots \\ y^T (A_m^T + A_m)x \end{pmatrix}$$

$$\cdots \ (9)$$

$$f_I(x+y) = (x+y)^T A_I(x+y) + b_I^T(x+y)$$

$$= x^T A_I x + x^T A_I y + y^T A_I x + y^T A_I y + b_I^T x + b_I^T y$$

$$= f_I(x) + f_I(y) + x^T A_I y + y^T A_I x$$

$$= f_I(x) + f_I(y) + x^T (A_I^T)^T y + y^T A_I x$$

$$= f_I(x) + f_I(y) + (A_I^T x)^T y + y^T A_I x$$

$$= f_I(x) + f_I(y) + y^T (A_I^T x) + y^T A_I x$$

$$= f_I(x) + f_I(y) + y^T (A_I^T + A_I) x$$

$$\cdots (10)$$

When dividing F(x + y) into a first portion dependent on x, a second portion dependent on y, and a third portion dependent on both x and y in this way, the term G(x, y) corresponding to the third portion becomes bilinear with respect to x and y. Hereinafter, the term G(x, y) is also referred to as a bilinear term. Using this property enables the construction of an efficient algorithm.

For example, use the vector to that is an element of the set $K^n$ and the vector $e_0$ that is an element of the set $K^m$ to express the multivariate polynomial $F_1(x)$, which is used to mask the multivariate polynomial $F(x + r)$, as $F_1(x) = G(x, \text{to}) + e_0$. In this case, the sum of the multivariate polynomial $F(x + r_0)$ and $G(x)$ is expressed as in formula (11) below. Here, when $t_1 = r_0 + t_0$, $e_1 = F(r_0) + e_0$, the multivariate polynomial $F_2(x) = F(x + r_0) + F_1(x)$ can be expressed by the vector $t_1$ which is an element of the set $K^n$ and the vector $e_1$ that is an element of the set $K^m$. For this reason, when $F_1(x) = G(x, \text{to}) + e_0$ is set, $F_1$ and $F_2$ can be expressed by using a vector in $K^n$ and a vector in $K^m$, and thus it is possible to realize an efficient algorithm of which a data size necessary for communication is small.
[Math 9]

$$F(x + r_0) + F_1(x)$$

$$= F(x) + F(r_0) + G(x, r_0) + G(x, t_0) + e_0$$

$$= F(x) + G(x, r_0 + t_0) + F(r_0) + e_0$$

$$\cdots (11)$$

Additionally, information on $r_0$ is not leaked at all from $F_2$ (or $F_1$). For example, even when $e_1$ and $t_1$ (or $e_0$ and to) are given, the information on $r_0$ is not known at all as long as $e_0$ and $t_0$ (or $e_1$ and $t_1$) are not known. Accordingly, the zero knowledge is ensured. Hereinafter, an algorithm of the 3-pass scheme constructed based on the foregoing logic will be described. The algorithm of the 3-pass scheme to be described here is made up of a key generation algorithm Gen, a prover algorithm P, and a verifier algorithm V to be described below.

(Key Generation Algorithm Gen)

The key generation algorithm Gen generates m multivariate polynomials $f_1(x_1, ..., x_n), ..., f_m(x_1, ..., x_n)$ defined in a ring k and a vector $s = (s_1, ..., s_n)$ that is an element of a set $K^n$. Next, the generation algorithm Gen calculates $y = (y_1, ..., y_m) \leftarrow (f_1(s), ..., f_m(s))$. Also, the generation algorithm Gen sets $(f_1(x_1, ..., x_n), ..., f_m(x_1, ..., x_n), y)$ in the public key pk and sets s as a secret key. Hereinafter, a vector $(x_1, ..., x_n)$ is represented as x and a pair of multivariate polynomials $(f_1(x), ..., f_m(x))$ is represented as F(x).

(Prover Algorithm P, Verifier Algorithm V)

Hereinafter, a process performed by the prover algorithm P and a process performed by the verifier algorithm V during the interactive protocol will be described with reference to FIG. 4. During the foregoing interactive protocol, a prover does not leak information on the secret key s at all to a verifier and expresses to the verifier that "she herself knows s satisfying y = F(s)." On the other hand, the verifier verifies whether or not the prover knows s satisfying y = F(s). The public key pk is assumed to be made known to the verifier. Also, the secret key s is assumed to be secretly managed by the prover. Hereinafter, the description will be made with reference to the flowchart illustrated in FIG. 4.

Operation #1:

As illustrated in FIG. 4, the prover algorithm P first randomly generates the vector $r_0$, to that is an element of the set $K^n$, and the vector $e_0$ that is an element of the set $K^m$. Subsequently, the prover algorithm P calculates $r_1 <- s - r_0$. This calculation is equivalent to masking the secret key s with the vector $r_0$. Additionally, the prover algorithm P calculates $t_1 <- r_0 - to$. Subsequently, the prover algorithm P calculates $e_1 <- F(r_0) - e_0$.

Operation #1 (continued):

Subsequently, the prover algorithm P calculates $c_0 <- H(r_1, G(t_0, r_1) + e_0)$. Subsequently, the prover algorithm P calculates $c_1 <- H(t_0, e_0)$. Subsequently, the prover algorithm P calculates $c_2 <- H(t_1, e_1)$. The message $(c_0, c_1, c_2)$ generated in operation #1 is sent to the verifier algorithm V.

Operation #2:

Upon receiving the message $(c_0, c_1, c_2)$, the verifier algorithm V selects which verification pattern to use from among three verification patterns. For example, the verifier algorithm V may select a numerical value from among three numerical values {0, 1, 2} representing verification patterns, and set the selected numerical value in a challenge Ch. This challenge Ch is sent to the prover algorithm P.

Operation #3:

Upon receiving the challenge Ch, the prover algorithm P generates a response Rsp to send to the verifier algorithm V in response to the received challenge Ch. In the case where Ch = 0, the prover algorithm P generates a response $Rsp = (r_0, t_1, e_1)$. In the case where Ch = 1, the prover algorithm P generates a response $Rsp = (r_1, t_0, e_0)$. In the case where Ch = 2, the prover algorithm P generates a response $Rsp = (r_1, t_1, e_1)$. The response Rsp generated in operation #3 is sent to the verifier algorithm V.

Operation #4:

Upon receiving the response Rsp, the verifier algorithm V executes the following verification process using the received response Rsp.

In the case where Ch = 0, the verifier algorithm V verifies whether or not the equality of $c_1 = H(r_0 - t_1, F(r_0) - e_1)$ holds. In addition, the verifier algorithm V verifies whether or not the equality of $c_2 = H(t_1, e_1)$ holds. The verifier algorithm V outputs the value 1 to indicate authentication success in the case where these verifications all succeed, and outputs the value 0 to indicate authentication failure in the case where a verification fails.

In the case where Ch = 1, the verifier algorithm V verifies whether or not the equality of $c_0 = H(r_1, G(t_0, r_1) + e_0)$ holds. In addition, the verifier algorithm V verifies whether or not the equality of $c_1 = H(t_0, e_0)$ holds. The verifier algorithm V outputs the value 1 to indicate authentication success in the case where these verifications all succeed, and outputs the value 0 to indicate authentication failure in the case where a verification fails.

In the case where Ch = 2, the verifier algorithm V verifies whether or not the equality of $c_0 = H(r_1, y - F(r_1) -$

$G(t_1, r_1) - e_1)$ holds. In addition, the verifier algorithm V verifies whether or not the equality of $c_2 = H(t_1, e_1)$ holds. The verifier algorithm V outputs the value 1 to indicate authentication success in the case where these verifications all succeed, and outputs the value 0 to indicate authentication failure in the case where a verification fails.

The example of the efficient algorithm structure related to the 3-pass scheme has been described above.

(2-2: Example of Parallelized Algorithm Structure (FIG. 5))

Next, a method of parallelizing the algorithm of the 3-pass scheme illustrated in FIG. 4 will be described with reference to FIG. 5. However, further description of the structure of the key generation algorithm Gen will be omitted.

In fact, applying the above session protocol makes it possible to keep the probability of a successful forgery to $2/3$ or less. Consequently, executing the session protocol twice makes it possible to keep the probability of a successful forgery to $(2/3)^2$ or less. Furthermore, if the session protocol is executed N times, the probability of a successful forgery becomes $(2/3)^N$, and if N is set to a sufficiently large number (N = 140, for example), the probability of a successful forgery becomes negligibly small.

Conceivable methods of executing the interactive protocol multiple times include a serial method in which the exchange of message, challenge, and response is sequentially repeated multiple times, and a parallel method in which multiple messages, challenges, and responses are exchanged in a single exchange, for example. Also, a hybrid type method combining the serial method and the parallel method is also conceivable. Here, algorithms that execute the above interactive protocol related to the 3-pass scheme in parallel (hereinafter designated parallelized algorithms) will now be described with reference to FIG. 5.

Operation #1:

As described in FIG. 5, the prover algorithm P first executes the following processes (1) to (6) for i = 1 to N.

Process (1): The prover algorithm P randomly generates the vectors $r_{0i}, t_{0i}$ that are elements of the set $K^n$, and the vector $e_{0i}$ that is an element of the set $K^m$.

Process (2): The prover algorithm P calculates $r_{1i} \leftarrow s - r_{0i}$. This calculation is equivalent to masking the secret key s with the vector $r_{0i}$. Additionally, the prover algorithm P calculates $t_{1i} \leftarrow r_{0i} + t_{0i}$.

Process (3): The prover algorithm P calculates $e_{1i} \leftarrow F(r_{0i}) - e_{0i}$.

Process (4): The prover algorithm P calculates $c_{0i} \leftarrow H(r_{1i}, G(r_{1i}, t_{0i}) + e_{0i})$.

Process (5): The prover algorithm P calculates $c_{1i} \leftarrow H(t_{0i}, e_{0i})$.

Process (6): The prover algorithm P calculates $c_{2i} \leftarrow H(t_{1i}, e_{1i})$.

Operation #1 (continued):

After executing the above processes (1) to (6) for i = 1 to N, the prover algorithm P calculates Cmt $\leftarrow H(c_{01}, c_{11}, c_{21}, ..., c_{0N}, c_{1N}, c_{2N})$. The hash value Cmt generated in operation #1 is sent to the verifier algorithm V. In this way, the message $(c_{01}, c_{11}, c_{21}, ..., c_{0N}, c_{1N}, c_{2N})$ is converted into a hash value before being sent to the verifier algorithm V, thus enabling a reduction in the communication volume.

Operation #2:

Upon receiving the hash value Cmt, the verifier algorithm V selects which verification pattern to use from among three verification patterns, for each of i = 1 to N. For example, the verifier algorithm V may, for each of i = 1 to N, select a numerical value from among three numerical values {0, 1, 2} representing verification patterns, and set the selected numerical value in a challenge $Ch_i$. The challenges $Ch_1, ..., Ch_N$ are sent to the prover algorithm P.

Operation #3:

Upon receiving the challenges $Ch_1, ..., Ch_N$, the prover algorithm P generates responses $Rsp_1, ..., Rsp_N$ to send to the verifier algorithm V in response to each of the received challenges $Ch_1, ..., Ch_N$. In the case where $Ch_i = 0$, the prover algorithm P generates a response $Rsp_i = (r_{0i}, t_{1i}, e_{1i}, c_{0i})$. In the case where $Ch_i = 1$, the prover algorithm P generates a response $Rsp_i = (r_{1i}, t_{0i}, e_{0i}, c_{2i})$. In the case where $Ch_i = 2$, the prover algorithm P generates a response $Rsp_i = (r_{1i}, t_{1i}, e_{1i}, c_{1i})$.

The responses $Rsp_1, ..., Rsp_N$ generated in operation #3 are sent to the verifier algorithm V.

Operation #4:

Upon receiving the responses $Rsp_1, ..., Rsp_N$, the verifier algorithm V executes the following processes (1) to (3) for i = 1 to N, using the received responses $Rsp_1, ..., Rsp_N$. Herein, the verifier algorithm V executes the process (1) for the case where $Ch_i = 0$, the process (2) in the case where $Ch_i = 1$, and the process (3) in the case where $Ch_i = 2$.

Process (1): In the case where $Ch_i = 0$, the verifier algorithm V retrieves $(r_{0i}, t_{1i}, e_{1i}, c_{0i})$ from $Rsp_i$. Subsequently, the verifier algorithm V calculates $c_{1i} = H(r_{0i} - t_{1i}, F(r_{0i}) - e_{1i})$. In addition, the verifier algorithm V calculates $c_{2i} = H(t_{1i}, e_{1i})$. The verifier algorithm V then stores $(c_{0i}, c_{1i}, c_{2i})$.

Process (2): In the case where $Ch_i = 1$, the verifier algorithm V retrieves $(r_{1i}, t_{0i}, e_{0i}, c_{2i})$ from $Rsp_i$. Subsequently, the verifier algorithm V calculates $c_{0i} = H(r_{1i}, G(t_{0i}, r_{1i}) + e_{0i})$. In addition, the verifier algorithm V calculates $c_{1i} = H(t_{0i}, e_{0i})$. The verifier algorithm V then stores $(c_{0i}, c_{1i}, c_{2i})$.

Process (3): In the case where $Ch_i = 2$, the verifier algorithm V retrieves $(r_{1i}, t_{1i}, e_{1i}, c_{1i})$ from $Rsp_i$. Subsequently, the verifier algorithm V calculates $c_{0i} = H(r_{1i}, y - F(r_{1i}) - G(t_{1i}, r_{1i}) - e_{1i})$. In addition, the verifier algorithm V calculates $c_{2i} = H(t_{1i}, e_{1i})$. The verifier algorithm V then stores $(c_{0i}, c_{1i}, c_{2i})$.

After executing the above processes (1) to (3) for i = 1 to N, the verifier algorithm V verifies whether or not the equality of $Cmt = H(c_{01}, c_{11}, c_{21}, ..., c_{0N}, c_{1N}, c_{2N})$ holds. The verifier algorithm V outputs the value 1 to indicate authentication success in the case where the verification succeeds, and outputs the value 0 to indicate authentication failure in the case where the verification fails.

The example of the structures of the parallelized efficient algorithms related to the 3-pass scheme has been described above.

<3: Algorithm Structure Related to 5-pass Public-key Authentication Scheme>

Next, algorithms related to a 5-pass public-key authentication scheme will be described. Note that in the following description, a 5-pass public-key authentication scheme may also be referred to as a "5-pass scheme" in some cases.

In the case of the 3-pass scheme, the probability of the false verification is 2/3 per time of the interactive protocol. However, in the case of the 5-pass scheme, the probability of the false verification per time of the interactive protocol is $1/2 + 1/q$. Here, q is an order of a ring to be used. Accordingly, when the order of the ring is sufficiently large, the probability of the false verification per time of the 5-pass scheme can be reduced, and thus the probability of the false verification can be sufficiently reduced by executing the interactive protocol a small number of times.

For example, when the probability of the false verification is desired to be equal to or less than $1/2^n$, the interactive protocol has to be executed n/(log3 - 1) = 1.701n times or more in the 3-pass scheme. On the other hand, when the probability of the false verification is desired to be equal to or less than $1/2^n$, the interactive protocol has to be executed n/(1 - log(1 + 1/q)) times or more in the 5-pass scheme. Accordingly, when q = 24, a communication quantity necessary to realize the same security level is less in the 5-pass scheme than in the 3-pass scheme.

[3-1: Example of Specific Algorithm Structure (FIG. 6)]

First, an example of a specific algorithm structure related to the 5-pass scheme will be introduced with reference to FIG. 6. FIG. 6 is an explanatory diagram for describing a specific algorithm structure related to the 5-pass scheme. Here, a case in which a pair of quadratic polynomials $(f_1(x), ..., f_m(x))$ are used as a part of the public key pk will be described. Here, a quadratic polynomial $f_i(x)$ is assumed to be expressed as in the foregoing formula (6). Also, a vector $(x_1, ..., x_n)$ is represented as x and a pair of quadratic multivariate polynomials $(f_1(x), ..., f_m(x))$ are represented as multivariate polynomials F(x).

As in the efficient algorithms related to the 3-pass scheme, two vectors, i.e., the vector to that is an element of the set $K^n$ and the vector $e_0$ that is an element of the set $K^m$, are used to express the multivariate polynomial $F_1(x)$, which is used to mask the multivariate polynomial $F(x + r_0)$, as $F_1(x) = G(x, to) + e_0$. When this expression is used, a relation expressed in the following formula (12) can be obtained for the multivariate polynomial $F(x + r_0)$.

[Math 10]

$$Ch_A \cdot F(x + r_0) + F_1(x)$$

$$= Ch_A \cdot F(x) + Ch_A \cdot F(r_0) + Ch_A \cdot G(x, r_0) + G(x, t_0) + e_0$$

$$= Ch_A \cdot F(x) + G(x, Ch_A \cdot r_0 + t_0) + Ch_A \cdot F(r_0) + e_0$$

$$\cdots (1\ 2)$$

For this reason, when $t_1 = Ch_A \cdot r_0 + $ to, $e_1 = Ch_A \cdot F(r_0) + e_0$, the multivariate polynomial $F_2(x) = Ch_A \cdot F(x + r_0) + F_1(x)$ after the masking can also be expressed by two vectors, i.e., the vector $t_1$ which is an element of the set $K^n$ and the vector $e_1$ that is an element of the set $K^m$. For this reason, when $F_1(x) = G(x, $ to$) + e_0$ is set, $F_1$ and $F_2$ can be expressed by using a vector in $K^n$ and a vector in $K^m$, and thus it is possible to realize an efficient algorithm of which a data size necessary for communication is small.

Additionally, information on $r_0$ is not at all leaked from $F_2$ (or $F_1$). For example, even when $e_1$ and $t_1$ (or $e_0$ and to) are given, the information on $r_0$ is not known at all as long as $e_0$ and to (or $e_1$ and $t_1$) are not known. Accordingly, the zero knowledge is ensured. Hereinafter, an algorithm of the 5-pass scheme constructed based on the foregoing logic will be described. The algorithm of the 5-pass scheme to be described here is made up of a key generation algorithm Gen, a prover algorithm P, and a verifier algorithm V to be described below.

(Key Generation Algorithm Gen)

The key generation algorithm Gen generates multivariate polynomials $f_1(x_1, ..., x_n)$, ..., $f_m(x_1, ..., x_n)$ defined in a ring k and a vector $s = (s_1, ..., s_n)$ that is an element of a set $K^n$. Next, the key generation algorithm Gen calculates y $= (y_1, ..., y_m) \leftarrow (f_1(s), ..., f_m(s))$. Also, the key generation algorithm Gen sets $(f_1 ..., f_m, y)$ in the public key pk and sets s as a secret key. Hereinafter, a vector $(x_1, ..., x_n)$ is represented as x and a pair of multivariate polynomials $(f_1(x), ..., f_m(x))$ is represented as $F(x)$.

(Prover Algorithm P, Verifier Algorithm V)

Hereinafter, a process performed by the prover algorithm P and a process performed by the verifier algorithm V during the interactive protocol will be described with reference to FIG. 6. During the foregoing interactive protocol, a prover does not leak information on the secret key s at all to a verifier and expresses to the verifier that "she herself knows s satisfying y = F(s)." On the other hand, the verifier verifies whether or not the prover knows s satisfying y = F(s). The public key pk is assumed to be made known to the verifier. Also, the secret key s is assumed to be secretly managed by the prover. Hereinafter, the description will be made with reference to the flowchart illustrated in FIG. 6.

Operation #1:

As illustrated in FIG. 10, the prover algorithm P randomly generates the vector $r_0$ that is an element of the set $K^n$, the vector to that is an element of the set $K^n$, and the vector $e_0$ that is an element of the set $K^m$. Subsequently, the prover algorithm P calculates $r_1 <- s - r_0$. This calculation is equivalent to masking the secret key s with the vector $r_0$. Subsequently, the prover algorithm P calculates the hash value $c_0$ of the vectors $r_0$, to, $e_0$. That is, the prover algorithm P calculates $c_0 <-H(r_0, $ to$, e_0)$. Subsequently, the prover algorithm P generates $G($ to$, r_1) + e_0$ and the hash value $c_1$ of $r_1$. That is, the prover algorithm P calculates $c_0 <- H(r_1, G($ to$, r_1) + $ eo$)$. The messages $(co, c_1)$ generated in operation #1 is sent to the verifier algorithm V.

Operation #2:

Upon receiving the messages $(c_0, c_1)$, the verifier algorithm V randomly selects one number $Ch_A$ from the origins of q rings K and sends the selected number $Ch_A$ to the prover algorithm P.

Operation #3:

Upon receiving the number $Ch_A$, the prover algorithm P calculates $t_1 <- Ch_A \cdot r_0 - $ to. Additionally, the prover

algorithm P calculates $e_1 <- Ch_A \cdot F(r_0) - e_0$. The prover algorithm P sends $t_1$ and $e_1$ to the verifier algorithm V.

Operation #4:

Upon receiving $t_1$ and $e_1$, the verifier algorithm V selects which verification pattern to use from between two verification patterns. For example, the verifier algorithm V may select a numerical value from between two numerical values {0, 1} representing verification patterns, and set the selected numerical value in a challenge $Ch_B$. This challenge $Ch_B$ is sent to the prover algorithm P.

Operation #5:

Upon receiving the challenge $Ch_B$, the prover algorithm P generates a response Rsp to send to the verifier algorithm V in response to the received challenge $Ch_B$. In the case where $Ch_B = 0$, the prover algorithm P generates a response Rsp = $r_0$. In the case where $Ch_B = 1$, the prover algorithm P generates a response Rsp = $r_1$. The response Rsp generated in operation #5 is sent to the verifier algorithm V.

Operation #6:

Upon receiving the response Rsp, the verifier algorithm V executes the following verification process using the received response Rsp.
In the case where $Ch_B = 0$, the verifier algorithm V executes $r_0 <-$ Rsp. Then, the verifier algorithm V verifies whether or not the equality of $c_0 = H(r_0, Ch_A \cdot ro - t_1, Ch_A \cdot F(r_0) - e_1)$ holds. The verifier algorithm V outputs the value 1 to indicate authentication success in the case where these verifications all succeed, and outputs the value 0 to indicate authentication failure in the case where a verification fails.
In the case where $Ch_B = 1$, the verifier algorithm V executes $r_1 <-$ Rsp. Then, the verifier algorithm V verifies whether or not the equality of $c_1 = H_1(r_1, Ch_A \cdot (y - F(r_1) - G(t_1, r_1) - e_1)$ holds. The verifier algorithm V outputs the value 1 to indicate authentication success in the case where these verifications all succeed, and outputs the value 0 to indicate authentication failure in the case where a verification fails.
The example of the efficient algorithm structure related to the 5-pass scheme has been described above.

[3-2: Example of Parallelized Algorithm Structure (FIG. 7)]

Next, a method of parallelizing the algorithm of the 5-pass scheme illustrated in FIG. 6 will be described with reference to FIG. 7. However, further description of the structure of the key generation algorithm Gen will be omitted.
As described above, applying the above interactive protocol related to the 5-pass scheme makes it possible to keep the probability of a successful forgery to (1/2 + 1/q) or less. Consequently, executing the interactive protocol twice makes it possible to keep the probability of a successful forgery to $(1/2 + 1/q)^2$ or less. Furthermore, if the interactive protocol is executed N times, the probability of a successful forgery becomes $(1/2 + 1/q)^N$, and if N is set to a sufficiently large number (N = 80, for example), the probability of a successful forgery becomes negligibly small.
Conceivable methods of executing an interactive protocol multiple times include a serial method in which the exchange of message, challenge, and response is sequentially repeated multiple times, and a parallel method in which multiple messages, challenges, and responses are exchanged in a single exchange, for example. Also, a hybrid type method combining the serial method and the parallel method is also conceivable. Here, algorithms that execute the above interactive protocol related to the 5-pass scheme in parallel (hereinafter designated parallelized algorithms) will now be described.

Operation #1:

As described in FIG. 7, the prover algorithm P first executes the following processes (1) to (4) for i = 1 to N.

Process (1): The prover algorithm P randomly generates the vectors $r_{0i}$, $t_{0i}$ that are elements of the set $K^n$, and the vector $e_{0i}$ that is an element of the set $K^m$.
Process (2): The prover algorithm P calculates $r_{1i}; <- s - r_{0i}$. This calculation is equivalent to masking the secret key s with the vector $r_{0i}$.
Process (3): The prover algorithm P calculates $c_{0i} <- H(r_{0i}, t_{0i}, e_{0i})$.
Process (4): The prover algorithm P calculates $c_{1i} <- H(r_{1i}, G(t_{0i}, r_{1i}) + e_{0i})$.

After executing the above processes (1) to (4) for i = 1 to N, the prover algorithm P executes the hash value

$Cmt \leftarrow H(c_{01}, c_{11}, ..., c_{0N}, c_{1N})$. The hash value $Cmt$ generated in operation #1 is sent to the verifier algorithm V.

Operation #2:

Upon receiving the hash value $Cmt$, the verifier algorithm V randomly selects one number $Ch_{Ai}$ from the origins of q rings K for i = 1 to N and sends the selected number $Ch_{Ai}$ (i = 1 to N) to the prover algorithm P.

Operation #3:

Upon receiving the number $Ch_{Ai}$ (i = 1 to N), the prover algorithm P calculates $t_{1i} \leftarrow Ch_{Ai} \cdot r_{0i} - t_{0i}$ for i = 1 to N. Additionally, the prover algorithm P calculates $e_{1i} \leftarrow Ch_{Ai} \cdot F(r_{0i}) - e_{0i}$ for i = 1 to N. Then, the prover algorithm P sends $t_{11}, ..., t_{1N}$ and $e_{11}, ..., e_{1N}$ to the verifier algorithm V.

Operation #4:

Upon receiving $t_{11}, ..., t_{1N}$ and $e_{11}, ..., e_{1N}$, the verifier algorithm V selects which verification pattern to use from between two verification patterns for i = 1 to N. For example, the verifier algorithm V may select a numerical value from between two numerical values {0, 1} representing verification patterns, and set the selected numerical value in a challenge $Ch_{Bi}$. This challenge $Ch_{Bi}$ (i = 1 to N) is sent to the prover algorithm P.

Operation #5:

Upon receiving the challenge $Ch_{Bi}$ (i = 1 to N), the prover algorithm P generates a response $Rsp_i$ to send to the verifier algorithm V in response to the received challenge $Ch_{Bi}$ for i = 1 to N. In the case where $Ch_{Bi} = 0$, the prover algorithm P generates a response $Rsp_i = (r_{0i}, c_{1i})$. In the case where $Ch_{Bi} = 1$, the prover algorithm P generates a response $Rsp_i = (r_{1i}, c_{0i})$. The response $Rsp_i$ (i = 1 to N) generated in operation #5 is sent to the verifier algorithm V.

Operation #6:

Upon receiving the response $Rsp_i$ (i = 1 to N), the verifier algorithm V executes the following processes (1) and (2) using the received response $Rsp_i$ (i = 1 to N).
Process (1): In the case where $Ch_{Bi} = 0$, the verifier algorithm V executes $(r_{0i}, c_{1i}) \leftarrow Rsp_i$. Then, the verifier algorithm V calculates $c_{0i} = H(r_{0i} - Ch_{Ai} \cdot r_{0i} - t_{1i}, Ch_{Ai} \cdot F(r_{0i}) - e_{1i})$. The verifier algorithm V then stores $(c_{0i}, c_{1i})$.
Process (2): In the case where $Ch_{Bi} = 1$, the verifier algorithm V executes $(r_{1i}, c_{0i}) \leftarrow Rsp_i$. Then, the verifier algorithm V calculates $c_{1i} = H(r_{1i} - Ch_{Ai} \cdot (y - F(r_{1i})) - G(t_{1i}, r_{1i}) - e_{1i})$. The verifier algorithm V then stores $(c_{0i}, c_{1i})$.
After executing the processes (1) and (2) for i = 1 to N, the verifier algorithm V verifies whether or not the equality of $Cmt = H(c_{01}, c_{11}, ..., c_{0N}, c_{1N})$ holds. The verifier algorithm V outputs the value 1 to indicate authentication success in the case where these verifications succeed, and outputs the value 0 to indicate authentication failure in the case where a verification fails.
The example of the structures of the parallelized efficient algorithms related to the 5-pass scheme has been described above.

<4: Modification of Digital Signature Scheme>

Here, a method of modifying the foregoing public-key authentication scheme into a digital signature scheme will be introduced.
When a prover in a model of a public-key authentication scheme matches a signer in a digital signature scheme, an approximation to the model of the digital signature scheme can easily be understood in that only a prover can convince a verifier. Based on this idea, a method of modifying the above-described public-key authentication scheme into a digital signature scheme will be descried.

[4-1: Modification of 3-pass Public-key Authentication Scheme into Digital Signature Scheme (FIG. 8)]

First, modification of a public-key authentication scheme of 3-pass into a digital signature scheme will be described.
As illustrated in FIG. 8, an efficient algorithm (for example, see FIG. 5) related to the 3-pass scheme is expressed with interactivity of three times and four operations, i.e., operation #1 to operation #4.
Operation #1 includes a process (1) of generating $a_i = (r_{0i}, t_{0i}, e_{0i}, r_{1i}, t_{1i}, e_{1i}, c_{0i}, c_{1i}, c_{2i})$ and a process (2) of

calculating Cmt <- $H(c_{01}, c_{11}, c_{21}, ..., c_{0N}, c_{1N}, c_{2N})$. Cmt generated in operation #1 by the prover algorithm P is sent to the verifier algorithm V.

Operation #2 includes a process of selecting $Ch_1, ..., Ch_N$. $Ch_1, ..., Ch_N$ selected in operation #2 by the verifier algorithm V are sent to the prover algorithm P.

Operation #3 includes a process of generating $Rsp_1, ..., Rsp_N$ using $Ch_1, ..., Ch_N$ and $a_1 ..., aN$. This process is expressed as $Rsp_i <- Select (Ch_i, a_i)$. $Rsp_1, ..., Rsp_N$ generated in operation #3 by the prover algorithm P are sent to the verifier algorithm V.

Operation #4 includes a process (1) of reproducing $c_{01}, c_{11}, c_{21}, ..., c_{0N}, c_{1N}, c_{2N}$ using $Ch_1, ..., Ch_N$ and $Rsp_1, ..., Rsp_N$ and a process (2) of verifying $Cmt = H(c_{01}, c_{11}, c_{21}, ..., c_{0N}, c_{1N}, c_{2N})$ using the reproduced $c_{01}, c_{11}, c_{21}, ..., c_{0N}, c_{1N}, c_{2N}$.

The algorithm of the public-key authentication scheme expressed with the foregoing operation #1 to operation #4 is modified into a signature generation algorithm Sig and a signature verifying algorithm Ver illustrated in FIG. 8.

(Signature Generation Algorithm Sig)

First, the structure of the signature generation algorithm Sig will be described. The signature generation algorithm Sig includes the following processes (1) to (5).

Process (1): The signature generation algorithm Sig generates $a_i = (r_{0i}, t_{0i}, e_{0i}, r_{1i}, t_{1i}, e_{1i}, c_{0i}, c_{1i}, c_{2i})$.
Process (2): The signature generation algorithm Sig calculates $Cmt <- H(c_{01}, c_{11}, c_{21}, ..., c_{0N}, c_{1N}, C2N)$.
Process (3): The signature generation algorithm Sig calculates $(Ch_1, ..., Ch_N) <- H(M, Cmt)$. Here, M is a document to which a signature is attached.
Process (4): The signature generation algorithm Sig calculates $Rsp_i <- Select (Ch_i, a_i)$.
Process (5): The signature generation algorithm Sig sets $(Cmt, Rsp_1, ..., Rsp_N)$ as a signature.

(Signature Verifying Algorithm Ver)

Next, the structure of the signature verifying algorithm Ver will be described. The signature verifying algorithm Ver includes the following processes (1) to (3).

Process (1): The signature verifying algorithm Ver calculates $(Ch_1, ..., Ch_N) <- H(M, Cmt)$.
Process (2): The signature verifying algorithm Ver generates $c_{01}, c_{11}, c_{21}, ..., c_{0N}, c_{1N}, c_{2N}$ using $Ch_1, ..., ChN$ and $Rsp_1, ..., Rsp_N$.
Process (3): The signature verifying algorithm Ver verifies $Cmt = H(c_{01}, c_{11}, c_{21}, ..., c_{0N}, c_{1N}, c_{2N})$ using the reproduced $c_{01}, c_{11}, c_{21}, ..., c_{0N}, c_{1N}, c_{2N}$.

As described above, by matching the prover in the model of the public-key authentication scheme with the signer in the digital signature scheme, the algorithm of the public-key authentication scheme can be modified into the algorithm of the digital signature scheme.

[4-2: Modification of 5-pass Public-key Authentication Scheme into Digital Signature Scheme (FIG. 9)]

Next, a modification of the public-key authentication scheme related to the 5-pass into a digital signature scheme will be described.

As illustrated in FIG. 9, an efficient algorithm (for example, see FIG. 7) related to the 5-pass scheme is expressed with interactivity of five times and six operations, i.e., operation #1 to operation #6.

Operation #1 includes a process (1) of generating $a_i = (r_{0i}, t_{0i}, e_{0i}, r_{1i}, t_{1i}, e_{1i}, c_{0i}, c_{1i})$ for i = 1 to N and a process (2) of calculating $Cmt <- H(c_{01}, c_{11},..., c_{0N}, c_{1N})$. Cmt generated in operation #1 by the prover algorithm P is sent to the verifier algorithm V.

Operation #2 includes a process of selecting $Ch_{A1}, ..., Ch_{AN}$. $Ch_{A1}, ..., Ch_{AN}$ selected in operation #2 by the verifier algorithm V are sent to the prover algorithm P.

Operation #3 includes a process of generating $b_i = (t_{1i}, e_{1i})$ for i = 1 to N. Here, $b_1, ..., bN$ generated in operation #3 by the prover algorithm P are sent to the verifier algorithm V.

Operation #4 includes a process of selecting $CH_{B1}, ..., Ch_{BN}$. $Ch_{B1}, ..., Ch_{BN}$ selected in operation #4 by the verifier algorithm V are sent to the prover algorithm P.

Operation #5 includes a process of generating $Rsp_1, ..., Rsp_N$ using $Ch_{B1}, ..., Ch_{BN}, a_1, ..., aN, b_1, ..., bN$. This process is expressed as $Rsp_i <- Select (Ch_{Bi}, a_i, b_i)$. $Rsp_1, ..., Rsp_N$ generated in operation #5 by the prover algorithm P are sent to the verifier algorithm V.

Operation #6 includes a process (1) of reproducing $c_{01}, c_{11}, ..., c_{0N}, c_{1N}$ using $Ch_{A1}, ..., ChAN, Ch_{B1}, ..., Ch_{BN}$, $Rsp_1, ..., Rsp_N$ and a process (2) of verifying $Cmt = H(c_{01}, c_{11}, ..., c_{0N}, c_{1N}$ using the reproduced $c_{01}, c_{11}, ..., c_{0N}, c_{1N}$.

The algorithm of the public-key authentication scheme expressed with the foregoing operation #1 to operation #6 is modified into a signature generation algorithm Sig and a signature verifying algorithm Ver illustrated in FIG. 9.

(Signature Generation Algorithm Sig)

First, the structure of the signature generation algorithm Sig will be described. The signature generation algorithm Sig includes the following processes (1) to (7).

Process (1): The signature generation algorithm Sig generates $a_i = (r_{0i}, t_{0i}, e_{0i}, r_{1i}, t_{1i}, e_{1i}, c_{0i}, c_{1i})$.
Process (2): The signature generation algorithm Sig calculates $Cmt <- H(c_{01}, c_{11}, ..., c_{0N}, c_{1N})$.
Process (3): The signature generation algorithm Sig calculates $(Ch_{A1}, ..., Ch_{AN}) <- H(M, Cmt)$. Here, M is a document to which a signature is attached.
Process (4): The signature generation algorithm Sig generates $b_i = (t_{1i}, e_{1i})$ for i = 1 to N.
Process (5): The signature generation algorithm Sig calculates $(CH_{B1}, ..., Ch_{BN}) <- H(M, Cmt, Ch_{A1}, ..., Ch_{AN}, b_1, ..., bN)$. Additionally, modification into $(Ch_{B1}, ..., ChBN) <- H(Ch_{A1}, ..., ChAN, b_1, ..., b_N)$.may be performed.
Process (6): The signature generation algorithm Sig calculates $Rsp_i <- Select (Ch_{Bi}, a_i, b_i)$.
Process (7): The signature generation algorithm Sig sets $(Cmt, b_1, ..., bN, Rsp_1, ..., Rsp_N)$ as a digital signature.

(Signature Verifying Algorithm Ver)

Next, the structure of the signature verifying algorithm Ver will be described. The signature verifying algorithm Ver includes the following processes (1) to (4).

Process (1): The signature verifying algorithm Ver calculates $(Ch_{A1}, ..., Ch_{AN}) = H(M, Cmt)$.
Process (2): The signature verifying algorithm Ver calculates $(CH_{B1}, ..., Ch_{BN}) = H(M, Cmt, Ch_{A1}, ..., Ch_{AN}, b_1, ..., b_N)$. When modification into $(CH_{B1}, ..., Ch_{BN}) = H(Ch_{A1}, ..., Ch_{AN}, b_1, ..., b_N)$ is performed in the process (5) performed by the signature verifying algorithm Ver, the signature verifying algorithm Ver calculates $(Ch_{B1}, ..., Ch_{BN}) = H(Ch_{A1}, ..., Ch_{AN}, b_1, ..., b_N)$.
Process (3): The signature verifying algorithm Ver generates $c_{01}, c_{11}, ..., c_{0N}, c_{1N}$ using $Ch_{A1}, ..., Ch_{AN}, Ch_{B1}, ..., Ch_{BN}, Rsp_1, ..., Rsp_N$.
Process (4): The signature verifying algorithm Ver verifies $Cmt = H(c_{01}, c_{11}, ..., c_{0N}, c_{1N})$ using the reproduced $c_{01}, c_{11}, ..., c_{0N}, c_{1N}$.

As described above, by matching the prover in the model of the public-key authentication scheme with the signer in the digital signature scheme, the algorithm of the public-key authentication scheme can be modified into the algorithm of the digital signature scheme.

<5: Efficient Calculation Method For Bilinear Term G>

Incidentally, the algorithms related to the above public-key authentication scheme and the digital signature scheme include calculation of the bilinear term G defined in the following formula (13). For example, the algorithms (see FIGS. 4 and 5) of the 3-pass scheme include calculation of the bilinear term G in operation #1 and operation #4. Also, the algorithms (see FIGS. 6 and 7) of the 5-pass scheme include calculation of the bilinear term G in operation #1 and operation #6. Similarly, algorithms of the digital signature scheme obtained by modifying the algorithms of the public-key authentication scheme also include the calculation of the bilinear term G.
[Math 11]

$$G(x, y) = F(x + y) - F(x) - F(y)$$

$$\cdots (13)$$

As understood from the foregoing formula (13), it is necessary to execute calculation of the multivariate polynomials F three times in order to obtain the value of the bilinear term G. Also, the multivariate polynomials F include the

m quadratic polynomials $f_l$ (where $1 = 1, ..., m$). Therefore, in order to obtain the values of the multivariate polynomials F, a calculation amount (hereinafter referred to as a calculation amount Z) which is m times a calculation amount necessary for executing the m quadratic polynomials $f_l$ is necessary. That is, the calculation amount necessary for obtaining the value of the bilinear term G is $3 \times Z$ or more. Here, a method of reducing the calculation amount necessary for obtaining the value of the bilinear term G more than 3 x Z will be described.

[5-1: Description of Principle]

A quadratic polynomial $f_l(x + y)$ can be expanded as shown in the following formula (14). Thus, an element $g_l(x, y)$ of the bilinear term $G = (g_l, ..., g_m)$ is expressed as in the following formula (15). As understood from the following formula (15), the element $g_l(x, y)$ includes two quadratic polynomials. For this reason, by calculating the bilinear term G based on the expansion shown in the following formula (15), it is possible to suppress a calculation amount of the bilinear term G to the extent of 2 x Z.
[Math 12]

$$
\begin{aligned}
f_l(x+y) &= (x+y)^T A_l(x+y) + b_l^T(x+y) \\
&= x^T A_l x + x^T A_l y + y^T A_l x + y^T A_l y + b_l^T x + b_l^T y \\
&= f_l(x) + f_l(y) + x^T A_l y + y^T A_l x
\end{aligned}
$$

$$\cdots (1 4)$$

$$
\begin{aligned}
g_l(x, y) &= f_l(x+y) - f_l(x) - f_l(y) \\
&= x^T A_l y + y^T A_l x
\end{aligned}
$$

$$\cdots (1 5)$$

When the quadratic polynomial $f_l$ is defined in a form (see the following formula (16)) in which the right-side second term (linear term for $x_j$) of the foregoing formula (6) is omitted, $f_l$ and $g_l$ can be expressed as in the following formulas (18) and (19) based on the expression of the following formula (17). When this expression is used, an arithmetic module for calculating a function $w_l(x, y)$ is prepared and the bilinear term G or the multivariate polynomial F can be calculated by repeatedly using the arithmetic module. For example, the arithmetic module can be mounted on hardware or software and an algorithm can be executed using the mounted arithmetic module.
[Math 13]

$$f_l(x) = x^T A_l x = \sum_{j,k} a_{ljk} x_j x_k$$

$$\cdots (1 6)$$

$$w_l(x, y) = x^T A_l y$$

$$\cdots \quad (17)$$

$$g_l(x, y) = w_l(x, y) + w_l(y, x)$$

$$\cdots \quad (18)$$

$$f_l(x) = w_l(x, x)$$

$$\cdots \quad (19)$$

The principle of the efficient calculation method for the bilinear term G has been described above. Here, the method of defining the quadratic polynomial $f_l$ as in the foregoing formula (16) has been described, but the application range of the technology related to the present embodiment is not limited thereto. The definition shown in the foregoing formula (6) may be used without change. In this case, a linear term for $x_j$ is shown in the foregoing formula (19). However, in the following description, the description will be made on the assumption that the quadratic polynomial $f_l$ is defined as in the foregoing formula (16).

[5-2: Application Example #1 (Application to 3-pass Scheme)]

First, a specific application method for the algorithm of the 3-pass scheme will be described.

(Simple Application Example)

Referring to FIG. 4, in operation #1, the calculation of the bilinear term $G(t_0, r_1)$ appears when the message $c_0$ is calculated. Thus, the prover algorithm P calculates the bilinear term $G(t_0, r_1)$ using $g_l(t_0, r_1) = w_l(t_0, r_1) + w_l(r_1, t_0)$. Also, in operation #4, the calculation of the bilinear term $G(t_0, r_1)$ appears in the case where Ch = 1 and the calculation of the bilinear term $G(t_1, r_1)$ appears in the case where Ch = 2. Accordingly, the prover algorithm V calculates the bilinear term $G(t_0, r_1)$ using $g_l(t_0, r_1) = w_l(t_0, r_1) + w_l(r_1, t_0)$ in the case where Ch = 1 and calculates the bilinear term $G(tt, r_1)$ using $g_l(t_1, r_1) = w_l(t_1, r_1) + w_l(r_1, t_1)$ in the case where Ch = 2. When this method is applied, a calculation amount necessary for calculating the bilinear term G is suppressed to the extent of 2 x Z.

(Efficient Application Example)

By using the above method, it is possible to efficiently execute calculation of the bilinear term G. In operation #4, however, a method of executing the calculation more efficiently can be realized when the term $(y - F(r_1) - G(t_1, r_1) - e_1)$ to be calculated in the case where Ch = 2 is focused on. According to the definition of the foregoing formula (13), $F(r_1) + G(t_1, r_1) = F(t_1 + r_1) - F(t_1)$. Thus, when the left side is calculated simply, the calculation amount is about $1 \times Z + 3 \times Z = 4 \times Z$. However, when it can be understood referring to the right side, the calculation amount is reduced to the extent of 2 x Z by this modification.

Also, as specific application methods for the arithmetic module wl(x, y), several methods can be considered as in the following formula (20). Regardless of what method is used, the calculation amount necessary for calculating $F(r_1) + G(t_1, r_1)$ is the extent of 2 x Z.

[Math 14]

$$f_l(y) + g_l(x,y) = y^T A_l y + x^T A_l y + y^T A_l x$$

$$= y^T A_l (x+y) + x^T A_l y = w_l(y, x+y) + w_l(x,y)$$

$$= (x^T + y^T)A_l y + y^T A_l x = w_l(x+y, y) + w_l(y,x)$$

$$= (x^T + y^T)A_l(x+y) - x^T A_l x = w_l(x+y, x+y) - w_l(x,x)$$

$$\cdots (20)$$

The specific application methods for the algorithm of the 3-pass scheme have been described above. Here, the description has been made with reference to the algorithm illustrated in FIG. 4. However, the same can also apply to the parallelized algorithm illustrated in FIG. 5 or an algorithm modified from the algorithm.

[5-3: Application Example #2 (Application to 5-pass Scheme)]

Next, a specific application method for the algorithm of the 5-pass scheme will be described.

Referring to FIG. 6, in operation #1, the calculation of the bilinear term $G(t_0, r_1)$ appears when the message $c_1$ is calculated. Thus, the prover algorithm P calculates the bilinear term $G(t_0, r_1)$ using $g_l(t_0, r_1) = w_l(t_0, r_1) + w_l(r_1, t_0)$. Also, in operation #6, the calculation of the bilinear term $G(t_1, r_1)$ appears in the case where $Ch_B = 1$. Accordingly, the prover algorithm V calculates the bilinear term $G(t_1, r_1)$ using $g_l(t_1, r_1) = w_l(t_1, r_1) + w_l(r_1, t_1)$ in the case where $Ch_B = 1$. When this method is applied, a calculation amount necessary for calculating the bilinear term G is suppressed to the extent of $2 \times Z$.

The specific application method for the algorithm of the 5-pass scheme has been described above. Here, the description has been made with reference to the algorithm illustrated in FIG. 6. However, the same can also apply to the parallelized algorithm illustrated in FIG. 7 or an algorithm modified from the algorithm.

[5-4: Application Example #3 (Application to Digital Signature Scheme)]

Next, a specific application method for the algorithm of the digital signature scheme will be described.

(Application to Digital Signature Scheme Based on 3-pass Scheme)

The algorithm of the digital signature scheme illustrated in FIG. 8 is an algorithm based on the parallelized algorithm of the 3-pass scheme illustrated in FIG. 5. Thus, when the signature generation algorithm Sig calculates the message $c_{0i}$, the calculation of the bilinear term $G(t_{0i}, r_{1i})$ appears. Accordingly, the signature generation algorithm Sig calculates the bilinear term $G(t_{0i}, r_{1i})$ using $g_l(t_{0i}, r_{1i}) = w_l(t_{0i}, r_{1i}) + w_l(r_{1i}, t_{0i})$.

Also, when the signature verifying algorithm Ver calculates the message $c_{0i}$, the calculation of the bilinear term $G(t_{0i}, r_{1i})$ or the bilinear term $G(t_{1i}, r_{1i})$ appears. Accordingly, the signature verifying algorithm Ver calculates the bilinear term $G(t_{0i}, r_{1i})$ using $g_l(t_{0i}, r_{1i}) = w_l(t_{0i}, r_{1i}) + w_l(r_{1i}, t_{0i})$ and calculates the bilinear term $G(t_{1i}, r_{1i})$ using $g_l(t_{1i}, r_{1i}) = w_l(t_{1i}, r_{1i}) + w_l(r_{1i}, t_{1i})$. When this method is applied, a calculation amount necessary for calculating the bilinear term G is suppressed to the extent of $2 \times Z$.

Also, by executing the calculation based on the foregoing formula (20) focusing on the calculation of $F(r_{1i}) + G(t_{1i}, r_{1i})$ executed when the signature verifying algorithm Ver calculates the message c0i, it is possible to further reduce the calculation amount.

(Application to Digital Signature Scheme Based on 5-pass Scheme)

The algorithm of the digital signature scheme illustrated in FIG. 9 is an algorithm based on the parallelized algorithm of the 5-pass scheme illustrated in FIG. 7. Thus, when the signature generation algorithm Sig calculates the message $c_{1i}$, the calculation of the bilinear term $G(t_{0i}, r_{1i})$ appears. Accordingly, the signature generation algorithm Sig calculates the bilinear term $G(t_{0i}, r_{1i})$ using $g_l(t_{0i}, r_{1i}) = w_l(t_{0i}, r_{1i}) + w_l(r_{1i}, t_{0i})$. Also, when the signature verifying algorithm Ver generates the message $c_{1i}$, the bilinear term $G(t_{1i}, r_{1i})$ appears. Accordingly, the signature verifying algorithm Ver calculates the bilinear term $G(t_{1i}, r_{1i})$ using $g_l(t_1, r_1) = w_l(t_1, r_1) + w_l(r_1, t_1)$. When this method is applied, a calculation amount necessary for calculating the bilinear term G is suppressed to the extent of 2 x Z.

The specific application methods for the algorithm of the digital signature scheme have been described above. Here, the description has been made with reference to the algorithms illustrated in FIGS. 8 and 9. However, the same can also apply to algorithms modified from these algorithms.

The efficient calculation methods for the bilinear term G have been described above.

<6: Example of Hardware Configuration>

Each algorithm described above can be performed by using, for example, the hardware configuration of the information processing apparatus shown in FIG. 10. That is, processing of each algorithm can be realized by controlling the hardware shown in FIG. 10 using a computer program. Additionally, the mode of this hardware is arbitrary, and may be a personal computer, a mobile information terminal such as a mobile phone, a PHS or a PDA, a game machine, a contact or non-contact IC chip, a contact or non-contact IC card, or various types of information appliances. Moreover, the PHS is an abbreviation for Personal Handy-phone System. Also, the PDA is an abbreviation for Personal Digital Assistant.

As shown in FIG. 10, this hardware mainly includes a CPU 902, a ROM 904, a RAM 906, a host bus 908, and a bridge 910. Furthermore, this hardware includes an external bus 912, an interface 914, an input unit 916, an output unit 918, a storage unit 920, a drive 922, a connection port 924, and a communication unit 926. Moreover, the CPU is an abbreviation for Central Processing Unit. Also, the ROM is an abbreviation for Read Only Memory. Furthermore, the RAM is an abbreviation for Random Access Memory.

The CPU 902 functions as an arithmetic processing unit or a control unit, for example, and controls entire operation or a part of the operation of each structural element based on various programs recorded on the ROM 904, the RAM 906, the storage unit 920, or a removable recording medium 928. The ROM 904 is means for storing, for example, a program to be loaded on the CPU 902 or data or the like used in an arithmetic operation. The RAM 906 temporarily or perpetually stores, for example, a program to be loaded on the CPU 902 or various parameters or the like arbitrarily changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote control that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. Moreover, the CRT is an abbreviation for Cathode Ray Tube. The LCD is an abbreviation for Liquid Crystal Display. The PDP is an abbreviation for Plasma Display Panel. Also, the ELD is an abbreviation for ElectroLuminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is an abbreviation for Hard Disk Drive.

The drive 922 is a device that reads information recorded on the removable recording medium 928 such as a magnetic disk, an optical disk, a magneto-optical disk, or a semiconductor memory, or writes information in the removable recording medium 928. The removable recording medium 928 is, for example, a DVD medium, a Blu-ray medium, an HD-DVD medium, various types of semiconductor storage media, or the like. Of course, the removable recording medium 928 may be, for example, an electronic device or an IC card on which a non-contact IC chip is mounted. The IC is an abbreviation for Integrated Circuit.

The connection port 924 is a port such as an USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. Moreover, the USB is an abbreviation for Universal Serial Bus. Also, the SCSI is an abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or a device for contact or non-contact communication. The network 932 connected to the communication unit 926 is configured from a wire-connected or wirelessly connected network, and is the Internet, a home-use LAN, infrared communication, visible light communication, broadcasting, or satellite communication, for example. Moreover, the LAN is an abbreviation for Local Area Network. Also, the WUSB is an abbreviation for Wireless USB. Furthermore, the ADSL is an abbreviation for Asymmetric Digital Subscriber Line.

<7: Summary>

Lastly, the technical contents according to the embodiment of the present technology will be briefly described. The technical contents stated here can be applied to various information processing apparatuses, such as a personal computer, a mobile phone, a game machine, an information terminal, an information appliance, a car navigation system, and the like. Further, the function of the information processing apparatus described below can be realized by using a single information processing apparatus or using a plurality of information processing apparatuses. Furthermore, a data storage means and an arithmetic processing means which are used for performing a process by the information processing apparatus described below may be mounted on the information processing apparatus, or may be mounted on a device connected via a network.

The functional configuration of the foregoing information processing apparatus is realized as follows. For example, an information processing apparatus described in the following (1) has a function of executing an algorithm of an efficient public-key authentication scheme or a digital signature scheme that bases its safety on the difficulty of solving multi-order multivariate simultaneous equations.

(1) An information processing apparatus including:

a message generation unit configured to generate a message based on a pair of quadratic multivariate polynomials $F = (f_1, ..., f_m)$ defined in a ring K and expressed in a quadratic form and a vector s that is an element of a set $K^n$;
a message supply unit configured to supply the message to a verifier storing the pair of quadratic multivariate polynomials F and vectors $y = (y_1, ..., y_m) = (f_1(s), ..., f_m(s))$; and
a response supply unit configured to supply the verifier with response information corresponding to a verification pattern which the verifier selects from among k (where $k \geq 3$) verification patterns,
wherein the vector s is a secret key,
wherein the pair of quadratic multivariate polynomials F and the vectors y are public keys,
wherein the message is information obtained by executing calculation prepared in advance for the verification pattern corresponding to the response information based on the public keys and the response information, and
wherein, when the message is generated, the message generation unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where $l = 1$ to $m$ and $A_l$ is an $n \times n$ coefficient matrix).

(2) The information processing apparatus according to (1),
wherein the message generation unit generates the messages of N times (where $N \geq 2$),
wherein the message supply unit supplies the verifier with the messages of the N times with interactivity of one time, and
wherein the response supply unit supplies the verifier with the response information of the N times corresponding to the verification patterns selected by the verifier for each of the messages of the N times, with interactivity of one time.

(3) An information processing apparatus including:

an information storage unit configured to store a pair of quadratic multivariate polynomials $F = (f_1, ..., f_m)$ defined in a ring K and expressed in a quadratic form and vectors $y = (y_1, .... y_m) = (f_1(s), ..., f_m(s))$;
a message acquisition unit configured to acquire a message generated based on the pair of quadratic multivariate polynomials F and a vector s that is an element of a set $K^n$;
a pattern information supply unit configured to supply a prover supplying the message with information on one verification pattern randomly selected from among k (where $k \geq 3$) verification patterns;
a response acquisition unit configured to acquire response information corresponding to the selected verification pattern from the prover; and
a verification unit configured to verify whether or not the prover stores the vector s based on the message, the pair of quadratic multivariate polynomials F, the vectors y, and the response information,
wherein the vector s is a secret key,
wherein the pair of quadratic multivariate polynomials F and the vectors y are public keys,
wherein the message is information obtained by executing calculation prepared in advance for the verification pattern corresponding to the response information based on the public keys and the response information, and
wherein, when the message used for the verification is reproduced, the verification unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where $l = 1$ to $m$ and $A_l$ is an $n \times n$ coefficient matrix).

(4) The information processing apparatus according to (3),
wherein the message acquisition unit acquires the messages of N times (where $N \geq 2$) with interactivity of one time,
wherein the pattern information supply unit selects the verification pattern for each of the messages of the N times and supplies the prover with the information on the selected verification patterns of the N times with interactivity of one time,
wherein the response acquisition unit acquires the response information of the N times corresponding to the selected verification patterns of the N times from the prover with interactivity of one time, and
wherein the verification unit determines that the prover stores the vector s when the verification succeeds for all of the messages of the N times.

(5) An information processing apparatus including:

a message generation unit configured to generate a message based on a pair of quadratic multivariate polynomials $F = (f_1, ..., f_m)$ defined in a ring K and expressed in a quadratic form and a vector s that is an element of a set $K^n$;

a message supply unit configured to supply the message to a verifier storing the pair of quadratic multivariate polynomials F and vectors $y = (y_1, ..., y_m) = (f_1(s), ..., f_m(s))$;

an intermediate information generation unit configured to generate third information using first information randomly selected by the verifier and second information obtained at a time of generation of the message;

an intermediate information supply unit configured to supply the third information to the verifier; and

a response supply unit configured to supply the verifier with response information corresponding to a verification pattern which the verifier selects from among k (where $k \geq 2$) verification patterns,

wherein the vector s is a secret key,

wherein the pair of multi-order multivariate polynomials F and the vectors y are public keys,

wherein the message is information obtained by executing calculation prepared in advance for the verification pattern corresponding to the response information based on the public keys, the first information, the third information, and the response information, and

wherein, when the message is generated, the message generation unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where $l = 1$ to $m$ and $A_l$ is an $n \times n$ coefficient matrix).

(6) The information processing apparatus according to (5),
wherein the message generation unit generates the messages of N times (where $N \geq 2$),
wherein the message supply unit supplies the verifier with the messages of the N times with interactivity of one time,
wherein the intermediate information generation unit generates the third information of the N times based on the first information selected by the verifier for each of the messages of the N times and the second information of the N times obtained at the time of the generation of the messages,
wherein the intermediate information supply unit supplies the verifier with the third information of the N times with interactivity of one time, and
wherein the response supply unit supplies the verifier with the response information of the N times corresponding to the verification patterns selected by the verifier for each of the messages of the N times, with interactivity of one time.

(7) An information processing apparatus including:

an information storage unit configured to store a pair of quadratic multivariate polynomials $F = (f_1, ..., f_m)$ defined in a ring K and expressed in a quadratic form and vectors $y = (y_1, .... y_m) = (f_1(s), ..., f_m(s))$;

a message acquisition unit configured to acquire a message generated based on the pair of quadratic multivariate polynomials F and a vector s that is an element of a set $K^n$;

an information supply unit configured to supply the prover supplying the message with the randomly selected first information;

an intermediate information acquisition unit configured to acquire third information which the prover generates based on the first information and second information obtained at a time of the generation of the message;

a pattern information supply unit configured to supply the prover with information on one verification pattern randomly selected from among k (where $k \geq 3$) verification patterns;

a response acquisition unit configured to acquire response information corresponding to the selected verification pattern from the prover; and

a verification unit configured to verify whether or not the prover stores the vector s based on the message, the first information, the third information, the pair of quadratic multivariate polynomials F, and the response information,

wherein the vector s is a secret key,

wherein the pair of quadratic multivariate polynomials F and the vectors y are public keys,

wherein the message is information obtained by executing calculation prepared in advance for the verification pattern corresponding to the response information based on the public keys, the first information, the third information, and the response information,

wherein the message is information obtained by executing calculation prepared in advance for a verification pattern corresponding to the response information based on the public keys and the response information, and

wherein, when the message used for the verification is reproduced, the verification unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where l = 1 to m and $A_l$ is an n x n coefficient matrix).

(8) The information processing apparatus according to (7),

wherein the message acquisition unit acquires the messages of N times (where $N \geq 2$) with interactivity of one time,

wherein the information supply unit randomly selects the first information for each of the messages of the N times and provides the prover with the selected first information of the N times with interactivity of one time,

wherein the intermediate information acquisition unit acquires the third information of the N times generated by the prover based on the first information of the N times and the second information of the N times obtained at the time of the generation of the messages of the N times,

wherein the pattern information supply unit selects the verification pattern for each of the messages of the N times and supplies the prover with the information on the selected verification patterns of the N times with interactivity of one time,

wherein the response acquisition unit acquires the response information of the N times corresponding to the selected verification patterns of the N times from the prover with interactivity of one time, and

wherein the verification unit determines that the prover stores the vector s when the verification succeeds for all of the messages of the N times.

(9) A signature generation apparatus including:

a signature generation unit configured to generate a digital signature for a document M based on a pair of quadratic multivariate polynomials $F = (f_1, ..., f_m)$ defined in a ring K and expressed in a quadratic form and a signature key s that is an element of a set $K^n$; and

a signature supply unit configured to supply the digital signature to a verifier storing the pair of quadratic multivariate polynomials F and vectors $y = (f_1(s), ..., f_m(s))$,

wherein the signature generation unit executes calculation of a function $G = (g_1, ..., g_m)$ defined as $G(x_1, x_2) = F(x_1 + x_2) - F(x_1) - F(x_2)$ executed during the generation of the digital signature based on a formula $g_l(x_1, x_2) = x_1^T A_l x_2 + x_2^T A_l x_1$ (where l = 1 to m and $A_l$ is an n x n coefficient matrix).

(10) A signature verification apparatus including:

an information storage unit configured to store a pair of quadratic multivariate polynomials $F = (f_1, ..., f_m)$ defined in a ring K and expressed in a quadratic form and vectors $y = (f_1(s), ..., f_m(s))$; and

a signature verification unit configured to verify legitimacy of a document M based on a digital signature generated using the quadratic multivariate polynomials F and a signature key s that is an element of a set $K^n$ with respect to the document M,

wherein the signature verification unit executes calculation of a function $G = (g_1, ..., g_m)$ defined as $G(x_1, x_2) = F(x_1 + x_2) - F(x_1) - F(x_2)$ executed during the verification of the digital signature based on a formula $g_l(x_1, x_2) = x_1^T A_l x_2 + x_2^T A_l x_1$ (where l = 1 to m and $A_l$ is an n x n coefficient matrix).

(11) An information processing method including:

a step of generating a message based on a pair of quadratic multivariate polynomials $F = (f_1, ..., f_m)$ defined in a ring K and expressed in a quadratic form and a vector s that is an element of a set $K^n$;

a step of supplying the message to a verifier storing the pair of quadratic multivariate polynomials F and vectors $y = (y_1, ..., y_m) = (f_1(s), ..., f_m(s))$; and

a step of supplying the verifier with response information corresponding to a verification pattern which the verifier selects from among k (where $k \geq 3$) verification patterns,

wherein the vector s is a secret key,

wherein the pair of quadratic multivariate polynomials F and the vectors y are public keys,

wherein the message is information obtained by executing calculation prepared in advance for the verification pattern corresponding to the response information based on the public keys and the response information, and

wherein, in the step of generating the message, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where $l = 1$ to $m$ and $A_l$ is an $n \times n$ coefficient matrix) when the message is generated.

(12) An information processing method executed by an information processing apparatus configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$, the information processing method including:

a step of acquiring a message generated based on the pair of quadratic multivariate polynomials F and a vector s that is an element of a set $K^n$;
a step of supplying a prover supplying the message with information on one verification pattern randomly selected from among k (where $k \geq 3$) verification patterns;
a step of acquiring response information corresponding to the selected verification pattern from the prover; and
a step of verifying whether or not the prover stores the vector s based on the message, the pair of quadratic multivariate polynomials F, the vectors y, and the response information,
wherein the vector s is a secret key,
wherein the pair of quadratic multivariate polynomials F and the vectors y are public keys,
wherein the message is information obtained by executing calculation prepared in advance for the verification pattern corresponding to the response information based on the public keys and the response information, and
wherein, in the step of verifying whether or not the prover stores the vector s, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where $l = 1$ to $m$ and $A_l$ is an $n \times n$ coefficient matrix) when the message used for the verification is reproduced.

(13) An information processing method including:

a step of generating a message based on a pair of quadratic multivariate polynomials $F = (f_1, ..., f_m)$ defined in a ring K and expressed in a quadratic form and a vector s that is an element of a set $K^n$;
a step of supplying the message to a verifier storing the pair of quadratic multivariate polynomials F and vectors $y = (y_1, ..., y_m) = (f_1(s), ..., f_m(s))$;
a step of generating third information using first information randomly selected by the verifier and second information obtained at a time of generation of the message;
a step of supplying the third information to the verifier; and
a step of supplying the verifier with response information corresponding to a verification pattern which the verifier selects from among k (where $k \geq 2$) verification patterns,
wherein the vector s is a secret key,
wherein the pair of multi-order multivariate polynomials F and the vectors y are public keys,
wherein the message is information obtained by executing calculation prepared in advance for the verification pattern corresponding to the response information based on the public keys, the first information, the third information, and the response information, and
wherein, in the step of generating the message, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where $l = 1$ to $m$ and $A_l$ is an $n \times n$ coefficient matrix) when the message is generated.

(14) An information processing method executed by an information processing apparatus configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$, the information processing method including:

a step of acquiring a message generated based on the pair of quadratic multivariate polynomials F and a vector s that is an element of a set $K^n$;
a step of supplying the prover supplying the message with the randomly selected first information;
a step of acquiring third information which the prover generates based on the first information and second information obtained at a time of the generation of the message;
a step of supplying the prover with information on one verification pattern randomly selected from among k (where $k \geq 3$) verification patterns;
a step of acquiring response information corresponding to the selected verification pattern from the prover; and
a step of verifying whether or not the prover stores the vector s based on the message, the first information, the third information, the pair of quadratic multivariate polynomials F, and the response information,
wherein the vector s is a secret key,

wherein the pair of quadratic multivariate polynomials F and the vectors y are public keys,

wherein the message is information obtained by executing calculation prepared in advance for the verification pattern corresponding to the response information based on the public keys, the first information, the third information, and the response information,

wherein the message is information obtained by executing calculation prepared in advance for a verification pattern corresponding to the response information based on the public keys and the response information, and

wherein, in the step of verifying whether or not the prover stores the vector s, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where $l = 1$ to $m$ and $A_l$ is an $n \times n$ coefficient matrix) when the message used for the verification is reproduced.

(15) A signature generation method including:

a step of generating a digital signature for a document M based on a pair of quadratic multivariate polynomials $F = (f_1, ..., f_m)$ defined in a ring K and expressed in a quadratic form and a signature key s that is an element of a set $K^n$; and

a step of supplying the digital signature to a verifier storing the pair of quadratic multivariate polynomials F and vectors $y = (f_1(s), ..., f_m(s))$,

wherein, in the step of generating the digital signature, calculation of a function $G = (g_1, ..., g_m)$, which is defined as $G(x_1, x_2) = F(x_1 + x_2) - F(x_1) - F(x_2)$, executed during the generation of the digital signature is executed based on a formula $g_l(x_1, x_2) = x_1^T A_l x_2 + x_2^T A_l x_1$ (where $l = 1$ to $m$ and $A_l$ is an $n \times n$ coefficient matrix).

(16) A signature verification method executed by an information processing apparatus configured to store a pair of quadratic multivariate polynomials $F = (f_1, ..., f_m)$ defined in a ring K and expressed in a quadratic form and vectors $y = (f_1(s), ..., f_m(s))$, the signature verification method including:

a step of verifying legitimacy of a document M based on a digital signature generated using the quadratic multivariate polynomials F and a signature key s that is an element of a set $K^n$ with respect to the document M, wherein, in the step of verifying the legitimacy, calculation of a function $G = (g_1, ..., g_m)$, which is defined as $G(x_1, x_2) = F(x_1 + x_2) - F(x_1) - F(x_2)$, executed during the generation of the digital signature is executed based on a formula $g_l(x_1, x_2) = x_1^T A_l x_2 + x_2^T A_l x_1$ (where $l = 1$ to $m$ and $A_l$ is an $n \times n$ coefficient matrix).

(17) A program causing a computer to realize each function provided for the information processing apparatus according to any one of (1) to (8).

(18) A program causing a computer to realize each function provided for the signature generation apparatus according to (9).

(19) A program causing a computer to realize each function provided for the signature verification apparatus according to (10).

(20) A computer-readable recording medium having the program according to any one of (17) to (19) recorded thereon.

(Remark)

The above prover algorithm P is an example of the message generation unit, the message supply unit, the response supply unit, the intermediate information generation unit, and the intermediate information supply unit. Also, the above verifier algorithm V is an example of the information storage unit, the message acquisition unit, the pattern information supply unit, the response acquisition unit, the verification unit, and the intermediate information acquisition unit. Also, the above signature generation algorithm Sig is an example of the signature generation unit and the signature supply unit. Also, the above signature verifying algorithm Ver is an example of the information storage unit and the signature verification unit.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

In the above description, the algorithms using the hash function H have been introduced, but a commitment function COM may be used instead of the hash function H. The commitment function COM is a function in which a character string S and a random number p are used as factors. An example of the commitment function includes a scheme published by Shai Halevi and Silvio Micali in the international conference CRYPTO1996.

Reference Signs List

Gen    key generation algorithm
P      prover algorithm
V      verifier algorithm
Sig    signature generation algorithm
Ver    signature verifying algorithm

**Claims**

1.  An information processing apparatus comprising:

    a message generation unit configured to generate a message based on a pair of quadratic multivariate polynomials $F = (f_1, ..., f_m)$ defined in a ring K and expressed in a quadratic form and a vector s that is an element of a set $K^n$;
    a message supply unit configured to supply the message to a verifier storing the pair of quadratic multivariate polynomials F and vectors $y = (y_1, ..., y_m) = (f_1(s), ..., f_m(s))$; and
    a response supply unit configured to supply the verifier with response information corresponding to a verification pattern which the verifier selects from among k (where $k \geq 3$) verification patterns,
    wherein the vector s is a secret key,
    wherein the pair of quadratic multivariate polynomials F and the vectors y are public keys,
    wherein the message is information obtained by executing calculation prepared in advance for the verification pattern corresponding to the response information based on the public keys and the response information, and
    wherein, when the message is generated, the message generation unit executes calculation of a function G = $(g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where l = 1 to m and $A_l$ is an n x n coefficient matrix).

2.  The information processing apparatus according to claim 1,
    wherein the message generation unit generates the messages of N times (where $N \geq 2$),
    wherein the message supply unit supplies the verifier with the messages of the N times with interactivity of one time, and
    wherein the response supply unit supplies the verifier with the response information of the N times corresponding to the verification patterns selected by the verifier for each of the messages of the N times, with interactivity of one time.

3.  An information processing apparatus comprising:

    an information storage unit configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$;
    a message acquisition unit configured to acquire a message generated based on the pair of quadratic multivariate polynomials F and a vector s that is an element of a set $K^n$;
    a pattern information supply unit configured to supply a prover supplying the message with information on one verification pattern randomly selected from among k (where $k \geq 3$) verification patterns;
    a response acquisition unit configured to acquire response information corresponding to the selected verification pattern from the prover; and
    a verification unit configured to verify whether or not the prover stores the vector s based on the message, the pair of quadratic multivariate polynomials F, the vectors y, and the response information,
    wherein the vector s is a secret key,
    wherein the pair of quadratic multivariate polynomials F and the vectors y are public keys,
    wherein the message is information obtained by executing calculation prepared in advance for the verification pattern corresponding to the response information based on the public keys and the response information, and
    wherein, when the message used for the verification is reproduced, the verification unit executes calculation of a function G = $(g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where l = 1 to m and $A_l$ is an n x n coefficient matrix).

4.  The information processing apparatus according to claim 3,

wherein the message acquisition unit acquires the messages of N times (where $N \geq 2$) with interactivity of one time,
wherein the pattern information supply unit selects the verification pattern for each of the messages of the N times and supplies the prover with the information on the selected verification patterns of the N times with interactivity of one time,
wherein the response acquisition unit acquires the response information of the N times corresponding to the selected verification patterns of the N times from the prover with interactivity of one time, and
wherein the verification unit determines that the prover stores the vector s when the verification succeeds for all of the messages of the N times.

5. An information processing apparatus comprising:

a message generation unit configured to generate a message based on a pair of quadratic multivariate polynomials $F = (f_1, ..., f_m)$ defined in a ring K and expressed in a quadratic form and a vector s that is an element of a set $K^n$;
a message supply unit configured to supply the message to a verifier storing the pair of quadratic multivariate polynomials F and vectors $y = (y_1, ..., y_m) = (f_1(s), ..., f_m(s))$;
an intermediate information generation unit configured to generate third information using first information randomly selected by the verifier and second information obtained at a time of generation of the message;
an intermediate information supply unit configured to supply the third information to the verifier; and
a response supply unit configured to supply the verifier with response information corresponding to a verification pattern which the verifier selects from among k (where $k \geq 2$) verification patterns,
wherein the vector s is a secret key,
wherein the pair of multi-order multivariate polynomials F and the vectors y are public keys,
wherein the message is information obtained by executing calculation prepared in advance for the verification pattern corresponding to the response information based on the public keys, the first information, the third information, and the response information, and
wherein, when the message is generated, the message generation unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where $l = 1$ to m and $A_l$ is an n x n coefficient matrix).

6. The information processing apparatus according to claim 5,
wherein the message generation unit generates the messages of N times (where $N \geq 2$),
wherein the message supply unit supplies the verifier with the messages of the N times with interactivity of one time,
wherein the intermediate information generation unit generates the third information of the N times based on the first information selected by the verifier for each of the messages of the N times and the second information of the N times obtained at the time of the generation of the messages,
wherein the intermediate information supply unit supplies the verifier with the third information of the N times with interactivity of one time, and
wherein the response supply unit supplies the verifier with the response information of the N times corresponding to the verification patterns selected by the verifier for each of the messages of the N times, with interactivity of one time.

7. An information processing apparatus comprising:

an information storage unit configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$;
a message acquisition unit configured to acquire a message generated based on the pair of quadratic multivariate polynomials F and a vector s that is an element of a set $K^n$;
an information supply unit configured to supply the prover supplying the message with the randomly selected first information;
an intermediate information acquisition unit configured to acquire third information which the prover generates based on the first information and second information obtained at a time of the generation of the message;
a pattern information supply unit configured to supply the prover with information on one verification pattern randomly selected from among k (where $k \geq 3$) verification patterns;
a response acquisition unit configured to acquire response information corresponding to the selected verification pattern from the prover; and
a verification unit configured to verify whether or not the prover stores the vector s based on the message, the first information, the third information, the pair of quadratic multivariate polynomials F, and the response information,

wherein the vector s is a secret key,

wherein the pair of quadratic multivariate polynomials F and the vectors y are public keys,

wherein the message is information obtained by executing calculation prepared in advance for the verification pattern corresponding to the response information based on the public keys, the first information, the third information, and the response information,

wherein the message is information obtained by executing calculation prepared in advance for a verification pattern corresponding to the response information based on the public keys and the response information, and

wherein, when the message used for the verification is reproduced, the verification unit executes calculation of a function $G = (g_1, ..., g_m)$ defined as $G(x_1, x_2) = F(x_1 + x_2) - F(x_1) - F(x_2)$ based on a formula $g_l(x_1, x_2) = x_1^T A_l x_2 + x_2^T A_l x_1$ (where $l = 1$ to $m$ and $A_l$ is an $n \times n$ coefficient matrix).

8. The information processing apparatus according to claim 7,

wherein the message acquisition unit acquires the messages of N times (where $N \geq 2$) with interactivity of one time,

wherein the information supply unit randomly selects the first information for each of the messages of the N times and provides the prover with the selected first information of the N times with interactivity of one time,

wherein the intermediate information acquisition unit acquires the third information of the N times generated by the prover based on the first information of the N times and the second information of the N times obtained at the time of the generation of the messages of the N times,

wherein the pattern information supply unit selects the verification pattern for each of the messages of the N times and supplies the prover with the information on the selected verification patterns of the N times with interactivity of one time,

wherein the response acquisition unit acquires the response information of the N times corresponding to the selected verification patterns of the N times from the prover with interactivity of one time, and

wherein the verification unit determines that the prover stores the vector s when the verification succeeds for all of the messages of the N times.

9. A signature generation apparatus comprising:

a signature generation unit configured to generate a digital signature for a document M based on a pair of quadratic multivariate polynomials $F = (f_1, ..., f_m)$ defined in a ring K and expressed in a quadratic form and a signature key s that is an element of a set $K^n$; and

a signature supply unit configured to supply the digital signature to a verifier storing the pair of quadratic multivariate polynomials F and vectors $y = (f_1(s), ..., f_m(s))$,

wherein the signature generation unit executes calculation of a function $G = (g_1, ..., g_m)$ defined as $G(x_1, x_2) = F(x_1 + x_2) - F(x_1) - F(x_2)$ executed during the generation of the digital signature based on a formula $g_l(x_1, x_2) = x_1^T A_l x_2 + x_2^T A_l x_1$ (where $l = 1$ to $m$ and $A_l$ is an $n \times n$ coefficient matrix).

10. A signature verification apparatus comprising:

an information storage unit configured to store a pair of quadratic multivariate polynomials $F = (f_1, ..., f_m)$ defined in a ring K and expressed in a quadratic form and vectors $y = (f_1(s), ..., f_m(s))$; and

a signature verification unit configured to verify legitimacy of a document M based on a digital signature generated using the quadratic multivariate polynomials F and a signature key s that is an element of a set $K^n$ with respect to the document M,

wherein the signature verification unit executes calculation of a function $G = (g_1, ..., g_m)$ defined as $G(x_1, x_2) = F(x_1 + x_2) - F(x_1) - F(x_2)$ executed during the verification of the digital signature based on a formula $g_l(x_1, x_2) = x_1^T A_l x_2 + x_2^T A_l x_1$ (where $l = 1$ to $m$ and $A_l$ is an $n \times n$ coefficient matrix).

11. An information processing method comprising:

a step of generating a message based on a pair of quadratic multivariate polynomials $F = (f_1, ..., f_m)$ defined in a ring K and expressed in a quadratic form and a vector s that is an element of a set $K^n$;

a step of supplying the message to a verifier storing the pair of quadratic multivariate polynomials F and vectors $y = (y_1, ..., y_m) = (f_1(s), ..., f_m(s))$; and

a step of supplying the verifier with response information corresponding to a verification pattern which the verifier selects from among k (where $k \geq 3$) verification patterns,

wherein the vector s is a secret key,

wherein the pair of quadratic multivariate polynomials F and the vectors y are public keys,

wherein the message is information obtained by executing calculation prepared in advance for the verification pattern corresponding to the response information based on the public keys and the response information, and wherein, in the step of generating the message, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where $l = 1$ to $m$ and $A_l$ is an n x n coefficient matrix) when the message is generated.

12. An information processing method executed by an information processing apparatus configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$, the information processing method comprising:

   a step of acquiring a message generated based on the pair of quadratic multivariate polynomials F and a vector s that is an element of a set $K^n$;
   a step of supplying a prover supplying the message with information on one verification pattern randomly selected from among k (where $k \geq 3$) verification patterns;
   a step of acquiring response information corresponding to the selected verification pattern from the prover; and
   a step of verifying whether or not the prover stores the vector s based on the message, the pair of quadratic multivariate polynomials F, the vectors y, and the response information,
   wherein the vector s is a secret key,
   wherein the pair of quadratic multivariate polynomials F and the vectors y are public keys,
   wherein the message is information obtained by executing calculation prepared in advance for the verification pattern corresponding to the response information based on the public keys and the response information, and
   wherein, in the step of verifying whether or not the prover stores the vector s, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where $l = 1$ to $m$ and $A_l$ is an n x n coefficient matrix) when the message used for the verification is reproduced.

13. An information processing method comprising:

   a step of generating a message based on a pair of quadratic multivariate polynomials $F = (f_1, ..., f_m)$ defined in a ring K and expressed in a quadratic form and a vector s that is an element of a set $K^n$;
   a step of supplying the message to a verifier storing the pair of quadratic multivariate polynomials F and vectors $y = (y_1, ..., y_m) = (f_1(s), ..., f_m(s))$;
   a step of generating third information using first information randomly selected by the verifier and second information obtained at a time of generation of the message;
   a step of supplying the third information to the verifier; and
   a step of supplying the verifier with response information corresponding to a verification pattern which the verifier selects from among k (where $k \geq 2$) verification patterns,
   wherein the vector s is a secret key,
   wherein the pair of multi-order multivariate polynomials F and the vectors y are public keys,
   wherein the message is information obtained by executing calculation prepared in advance for the verification pattern corresponding to the response information based on the public keys, the first information, the third information, and the response information, and
   wherein, in the step of generating the message, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where $l = 1$ to $m$ and $A_l$ is an n x n coefficient matrix) when the message is generated.

14. An information processing method executed by an information processing apparatus configured to store a pair of quadratic multivariate polynomials $F = (f_1, ..., f_m)$ defined in a ring K and expressed in a quadratic form and vectors $y = (y_1, ..., y_m) = (f_1(s), ..., f_m(s))$, the information processing method comprising:

   a step of acquiring a message generated based on the pair of quadratic multivariate polynomials F and a vector s that is an element of a set $K^n$;
   a step of supplying the prover supplying the message with the randomly selected first information;
   a step of acquiring third information which the prover generates based on the first information and second information obtained at a time of the generation of the message;
   a step of supplying the prover with information on one verification pattern randomly selected from among k (where $k \geq 3$) verification patterns;
   a step of acquiring response information corresponding to the selected verification pattern from the prover; and
   a step of verifying whether or not the prover stores the vector s based on the message, the first information, the third information, the pair of quadratic multivariate polynomials F, and the response information,

wherein the vector s is a secret key,

wherein the pair of quadratic multivariate polynomials F and the vectors y are public keys,

wherein the message is information obtained by executing calculation prepared in advance for the verification pattern corresponding to the response information based on the public keys, the first information, the third information, and the response information,

wherein the message is information obtained by executing calculation prepared in advance for a verification pattern corresponding to the response information based on the public keys and the response information, and

wherein, in the step of verifying whether or not the prover stores the vector s, calculation of a function $G = (g_1, ..., g_m)$ defined as $G(x_1, x_2) = F(x_1 + x_2) - F(x_1) - F(x_2)$ is executed based on a formula $g_l(x_1, x_2) = x_1^T A_l x_2 + x_2^T A_l x_1$ (where $l = 1$ to $m$ and $A_l$ is an $n \times n$ coefficient matrix) when the message used for the verification is reproduced.

15. A signature generation method comprising:

a step of generating a digital signature for a document M based on a pair of quadratic multivariate polynomials $F = (f_1, ..., f_m)$ defined in a ring K and expressed in a quadratic form and a signature key s that is an element of a set $K^n$; and

a step of supplying the digital signature to a verifier storing the pair of quadratic multivariate polynomials F and vectors $y = (f_1(s), ..., f_m(s))$,

wherein, in the step of generating the digital signature, calculation of a function $G = (g_1, ..., g_m)$, which is defined as $G(x_1, x_2) = F(x_1 + x_2) - F(x_1) - F(x_2)$, executed during the generation of the digital signature is executed based on a formula $g_l(x_1, x_2) = x_1^T A_l x_2 + x_2^T A_l x_1$ (where $l = 1$ to $m$ and $A_l$ is an $n \times n$ coefficient matrix).

16. A signature verification method executed by an information processing apparatus configured to store a pair of quadratic multivariate polynomials $F = (f_1, ..., f_m)$ defined in a ring K and expressed in a quadratic form and vectors $y = (f_1(s), ..., f_m(s))$, the signature verification method comprising:

a step of verifying legitimacy of a document M based on a digital signature generated using the quadratic multivariate polynomials F and a signature key s that is an element of a set $K^n$ with respect to the document M, wherein, in the step of verifying the legitimacy, calculation of a function $G = (g_1, ..., g_m)$, which is defined as $G(x_1, x_2) = F(x_1 + x_2) - F(x_1) - F(x_2)$, executed during the generation of the digital signature is executed based on a formula $g_l(x_1, x_2) = x_1^T A_l x_2 + x_2^T A_l x_1$ (where $l = 1$ to $m$ and $A_l$ is an $n \times n$ coefficient matrix).

# FIG. 1

PUBLIC-KEY AUTHENTICATION SCHEME

# FIG. 2

DIGITAL SIGNATURE SCHEME

# FIG. 3

n-PASS PUBLIC-KEY
AUTHENTICATION SCHEME

# FIG. 4

EP 2 752 836 A1

pk: (F, y)

sk: $s \in_R K^n$ $\cdots\cdots$ PROVER   VERIFIER

ALGORITHM OF 3-PASS SCHEME

## OPERATION #1

$(r_0, t_0) \in_R K^n, e_0 \in_R K^m$
$r_1 \leftarrow s - r_0, t_1 \leftarrow r_0 - t_0$
$e_1 \leftarrow F(r_0) - e_0$
$c_0 \leftarrow H( r_1, G(t_0, r_1) + e_0 )$
$c_1 \leftarrow H( t_0, e_0 )$
$c_2 \leftarrow H( t_1, e_1 )$

$(c_0, c_1, c_2)$

Ch

## OPERATION #2

$Ch \in_R \{0, 1, 2\}$

## OPERATION #3

if Ch=0 then Rsp$\leftarrow (r_0, t_1, e_1)$
if Ch=1 then Rsp$\leftarrow (r_1, t_0, e_0)$
if Ch=2 then Rsp$\leftarrow (r_1, t_1, e_1)$

Rsp

## OPERATION #4

if Ch=0 then
$\qquad ( r_0, t_1, e_1 ) \leftarrow$ Rsp
check
$\qquad c_1 = H( r_0 - t_1, F(r_0) - e_1 )$,
$\qquad c_2 = H( t_1, e_1 )$
if Ch=1 then
$\qquad ( r_1, t_0, e_0 ) \leftarrow$ Rsp
check
$\qquad c_0 = H( r_1, G(t_0, r_1) + e_0 )$
$\qquad c_1 = H( t_0, e_0 )$
if Ch=2 then
$\qquad ( r_1, t_1, e_1 ) \leftarrow$ Rsp
check
$\qquad c_0 = H( r_1, y - F(r_1) - G(t_1, r_1) - e_1 )$
$\qquad c_2 = H( t_1, e_1 )$

# FIG. 5

pk: (F, y)

sk: $s \in_R K^n$ ----→ PROVER    VERIFIER

PARALLELIZED ALGORITHM OF 3-PASS SCHEME

## OPERATION #1

for i = 1 to N
    $(r_{0i}, t_{0i}) \in_R K^n$, $e_{0i} \in_R K^m$
    $r_{1i} \leftarrow s - r_{0i}$, $t_{1i} \leftarrow r_{0i} - t_{0i}$
    $e_{1i} \leftarrow F(r_{0i}) - e_{0i}$
    $c_{0i} \leftarrow H( r_{1i}, G(t_{0i}, r_{1i}) + e_{0i} )$
    $c_{1i} \leftarrow H( t_{0i}, e_{0i} )$
    $c_{2i} \leftarrow H( t_{1i}, e_{1i} )$
end for
Cmt $\leftarrow H( c_{01}, c_{11}, c_{21}, \cdots, c_{0N}, c_{1N}, c_{2N} )$

Cmt →

$Ch_1, \cdots, Ch_N$ ←

## OPERATION #2

$( Ch_1, \cdots, Ch_N ) \in_R \{0, 1, 2\}$

## OPERATION #3

for i = 1 to N
    if $Ch_i = 0$ then $Rsp_i \leftarrow ( r_{0i}, t_{1i}, e_{1i}, c_{0i} )$
    if $Ch_i = 1$ then $Rsp_i \leftarrow ( r_{1i}, t_{0i}, e_{0i}, c_{2i} )$
    if $Ch_i = 2$ then $Rsp_i \leftarrow ( r_{1i}, t_{1i}, e_{1i}, c_{1i} )$
end for

$Rsp_1, \cdots, Rsp_N$ →

## OPERATION #4

for i = 1 to N
  if $Ch_i = 0$ then
    $( r_{0i}, t_{1i}, e_{1i}, c_{0i} ) \leftarrow Rsp_i$
    $c_{1i} = H( r_{0i} - t_{1i}, F(r_{0i}) - e_{1i} )$
    $c_{2i} = H( t_{1i}, e_{1i} )$
  if $Ch_i = 1$ then
    $(r_{1i}, t_{0i}, e_{0i}, c_{2i} ) \leftarrow Rsp_i$
    $c_{0i} = H( r_{1i}, G(t_{0i}, r_{1i}) + e_{0i} )$
    $c_{1i} = H( t_{0i}, e_{0i} )$
  if $Ch_i = 2$ then
    $(r_{1i}, t_{1i}, e_{1i}, c_{1i}) \leftarrow Rsp_i$
    $c_{0i} = H( r_{1i}, y - F(r_{1i}) - G(t_{1i}, r_{1i}) - e_{1i} )$
    $c_{2i} = H( t_{1i}, e_{1i} )$
end for
check
    Cmt $= H( c_{01}, c_{11}, c_{21}, \cdots, c_{0N}, c_{1N}, c_{2N} )$

EP 2 752 836 A1

# FIG. 6

## ALGORITHM OF 5-PASS SCHEME

# FIG. 7

PARALLELIZED ALGORITHM OF 5-PASS SCHEME

pk: (F, y)

PROVER · VERIFIER

sk: $s \in_R K^n$

**OPERATION #1**

for i = 1 to N
$\quad r_{0i}, t_{0i} \in_R K^n, e_{0i} \in_R K^m$
$\quad r_{1i} \leftarrow s - r_{0i}$
$\quad c_{0i} \leftarrow H( r_{0i}, t_{0i}, e_{0i} )$
$\quad c_{1i} \leftarrow H( r_{1i}, G(t_{0i}, r_{1i}) + e_{0i} )$
end for
$Cmt \leftarrow H( c_{01}, c_{11}, \cdots, c_{0N}, c_{1N} )$

Cmt →

$(Ch_{A1}, \cdots, Ch_{AN})$ ←

**OPERATION #2**

$( Ch_{A1}, \cdots, Ch_{AN} ) \in_R K$

**OPERATION #3**

for i = 1 to N
$\quad t_{1i} \leftarrow Ch_{Ai} \cdot r_{0i} - t_{0i}$
$\quad e_{1i} \leftarrow Ch_{Ai} \cdot F(r_{0i}) - e_{0i}$
end for

$(t_{11}, \cdots, t_{1N}, e_{11}, \cdots, e_{1N})$ →

**OPERATION #4**

$( Ch_{B1}, \cdots, Ch_{BN} ) \in_R \{0,1\}$

$(Ch_{B1}, \cdots, Ch_{BN})$ ←

**OPERATION #5**

for i = 1 to N
$\quad$ if $Ch_{Bi}=0$ then $Rsp_i \leftarrow ( r_{0i}, c_{1i} )$
$\quad$ if $Ch_{Bi}=1$ then $Rsp_i \leftarrow ( r_{1i}, c_{0i} )$
end for

$(Rsp_1, \cdots, Rsp_N)$ →

**OPERATION #6**

for i = 1 to N
$\quad$ if $Ch_{Bi}=0$ then $( r_{0i}, c_{0i} ) \leftarrow Rsp_i$
$\quad\quad c_{0i} = H(r_{0i}, Ch_{Ai} \cdot r_{0i} - t_{1i}, Ch_{Ai} \cdot F(r_{0i}) - e_{1i})$
$\quad$ if $Ch_{Bi}=1$ then $( r_{1i}, c_{0i} ) \leftarrow Rsp_i$
$\quad\quad c_{1i} = H( r_{1i}, Ch_{Ai} \cdot ( y - F(r_{1i}) ) - G(t_{1i}, r_{1i}) - e_{1i} )$
end for
check
$\quad Cmt = H( c_{01}, c_{11}, \cdots, c_{0N}, c_{1N} )$

EP 2 752 836 A1

# FIG. 8

$$pk = (F, y)$$

PROVER → VERIFIER

MODIFICATION INTO DIGITAL SIGNATURE SCHEME
(3-PASS)

$sk = s$

## OPERATION #1

$a_i = ( r_{0i}, t_{0i}, e_{0i}, r_{1i}, t_{1i}, e_{1i}, c_{0i}, c_{1i}, c_{2i} )$
$Cmt \leftarrow H( c_{01}, c_{11}, c_{21}, \cdots, c_{0N}, c_{1N}, c_{2N} )$

$Cmt$

## OPERATION #2

Select $Ch_1, \cdots, Ch_N$

$Ch_1, \cdots, Ch_N$

## OPERATION #3

$Rsp_i \leftarrow Select( Ch_i, a_i )$

$Rsp_1, \cdots, Rsp_N$

## OPERATION #4

$(c_{01}, c_{11}, c_{21}, \cdots, c_{0N}, c_{1N}, c_{2N}) \leftarrow$
    $Reproduce(Ch_1, \cdots, Ch_N, Rsp_1, \cdots, Rsp_N)$
check $Cmt = H(c_{01}, c_{11}, c_{21}, \cdots, c_{0N}, c_{1N}, c_{2N})$

↓ DOCUMENT M

---

### SIGNATURE GENERATION ALGORITHM Sig

(1) $a_i = ( r_{0i}, t_{0i}, e_{0i}, r_{1i}, t_{1i}, e_{1i}, c_{0i}, c_{1i}, c_{2i} )$
(2) $Cmt \leftarrow H( c_{01}, c_{11}, c_{21}, \cdots, c_{0N}, c_{1N}, c_{2N} )$
(3) $( Ch_1, \cdots, Ch_N ) \leftarrow H( M, Cmt )$
(4) $Rsp_i \leftarrow Select( Ch_i, a_i )$
(5) DIGITAL SIGNATURE: $( Cmt, Rsp_1, \cdots, Rsp_N )$

+

### SIGNATURE VERIFYING ALGORITHM Ver

(1) $( Ch_1, \cdots, Ch_N ) \leftarrow H( M, Cmt )$
(2) $(c_{01}, c_{11}, c_{21}, \cdots, c_{0N}, c_{1N}, c_{2N}) \leftarrow$
    $Reproduce(Ch_1, \cdots, Ch_N, Rsp_1, \cdots, Rsp_N)$
(3) check $Cmt = H(c_{01}, c_{11}, c_{21}, \cdots, c_{0N}, c_{1N}, c_{2N})$

EP 2 752 836 A1

# FIG. 9

pk = (F, y)

sk = s ----→ PROVER    VERIFIER

MODIFICATION INTO DIGITAL SIGNATURE SCHEME
(5-PASS)

**OPERATION #1**

$a_i = ( r_{0i}, t_{0i}, e_{0i}, r_{1i}, t_{1i}, e_{1i}, c_{0i}, c_{1i} )$
$Cmt \leftarrow H( c_{01}, c_{11}, \cdots, c_{0N}, c_{1N} )$

Cmt →

**OPERATION #2**

Select $Ch_{A1}, \cdots, Ch_{AN}$

**OPERATION #3**

$b_i \leftarrow ( t_{1i}, e_{1i} )$

$Ch_{A1}, \cdots, Ch_{AN}$ ←

$b_1, \cdots, b_N$ →

**OPERATION #4**

Select $Ch_{B1}, \cdots, Ch_{BN}$

**OPERATION #5**

$Rsp_i \leftarrow Select( Ch_{Bi}, a_i, b_i )$

$Ch_{B1}, \cdots, Ch_{BN}$ ←

$Rsp_1, \cdots, Rsp_N$ →

**OPERATION #6**

$(c_{01}, c_{11}, \cdots, c_{0N}, c_{1N} ) \leftarrow$
    $Reproduce(Ch_{A1}, \cdots, Ch_{AN},$
        $Ch_{B1}, \cdots, Ch_{BN}, Rsp_1, \cdots, Rsp_N)$
check $Cmt = H(c_{01}, c_{11}, \cdots, c_{0N}, c_{1N} )$

DOCUMENT M

**SIGNATURE GENERATION ALGORITHM Sig**

(1) $a_i = ( r_{0i}, t_{0i}, e_{0i}, r_{1i}, t_{1i}, e_{1i}, c_{0i}, c_{1i} )$
(2) $Cmt \leftarrow H( c_{01}, c_{11}, \cdots, c_{0N}, c_{1N} )$
(3) $( Ch_{A1}, \cdots, Ch_{AN} ) \leftarrow H( M, Cmt )$
(4) $b_i = ( t_{1i}, e_{1i} )$
(5) $( Ch_{B1}, \cdots, Ch_{BN} ) \leftarrow$
      $H( \underline{M, Cmt}, Ch_{A1}, \cdots, Ch_{AN}, b_1, \cdots, b_N )$
(6) $Rsp_i \leftarrow Select( Ch_{Bi}, a_i, b_i )$
(7) DIGITAL SIGNATURE: $(Cmt, b_1, \cdots, b_N, Rsp_1, \cdots, Rsp_N)$

+

**SIGNATURE VERIFYING ALGORITHM Ver**

(1) $( Ch_{A1}, \cdots, Ch_{AN} ) \leftarrow H( M, Cmt )$
(2) $( Ch_{B1}, \cdots, Ch_{BN} ) \leftarrow$
      $H( \underline{M, Cmt}, Ch_{A1}, \cdots, Ch_{AN}, b_1, \cdots, b_N )$
(3) $(c_{01}, c_{11}, \cdots, c_{0N}, c_{1N} ) \leftarrow$
      $Reproduce(Ch_{A1}, \cdots, Ch_{AN},$
          $Ch_{B1}, \cdots, Ch_{BN}, Rsp_1, \cdots, Rsp_N)$
(4) check $Cmt = H(c_{01}, c_{11}, \cdots, c_{0N}, c_{1N})$

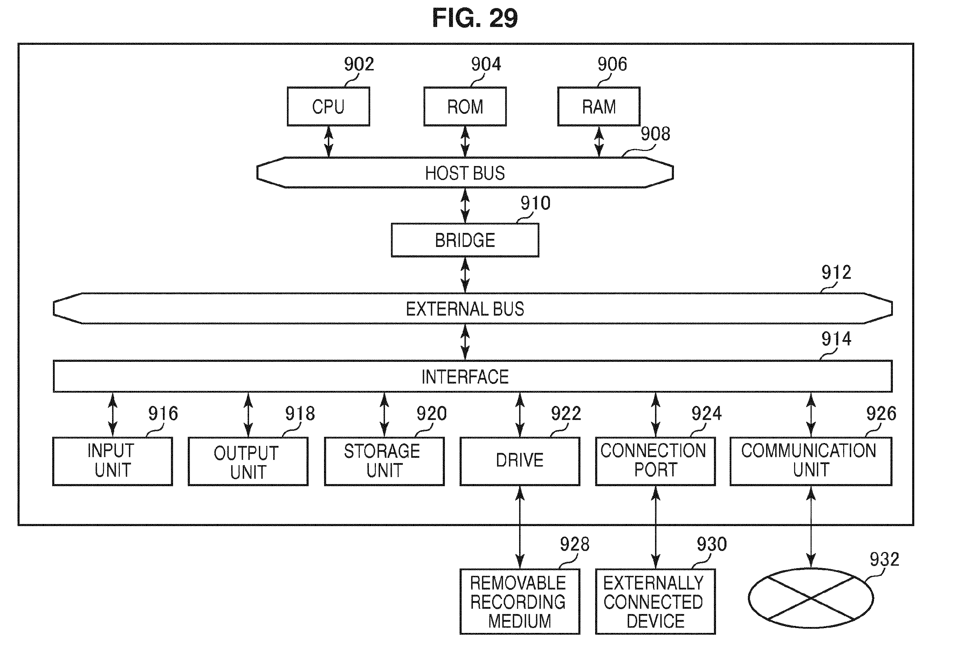

# FIG. 29

EP 2 752 836 A1

## INTERNATIONAL SEARCH REPORT

| International application No. |
|---|
| PCT/JP2012/068450 |

A. CLASSIFICATION OF SUBJECT MATTER
*G09C1/00*(2006.01)i, *H04L9/32*(2006.01)i

According to International Patent Classification (IPC) or to both national classification and IPC

B. FIELDS SEARCHED

Minimum documentation searched (classification system followed by classification symbols)
G09C1/00, H04L9/32

Documentation searched other than minimum documentation to the extent that such documents are included in the fields searched

| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| Y | Koichi Sakumoto et al, Public-Key Identification Schemes Based on Multivariate Quadratic Polynomials, Advances in Cryptology-CRYPTO 2011 31st Annual Cryptology Conference, Santa Barbara, CA, USA, August 14-18, 2011. Proceedings(LNCS 6841), 2011.08.06, Volume 6841, p.706-723 | 1-10 |
| Y | Mathematical Society of Japan, Iwanami Sugaku Jiten, 3rd edition, Iwanami Shoten, 10 December 1985 (10.12.1985), pages 902 to 903 | 1-10 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 August, 2012 (14.08.12) | 21 August, 2012 (21.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

45

**EP 2 752 836 A1**

**INTERNATIONAL SEARCH REPORT**

| International application No. |
| PCT/JP2012/068450 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2-266464 A  (Nippon Telegraph and Telephone Corp.), 31 October 1990 (31.10.1990), page 4, upper right column, line 10 to page 5, lower left column, line 12; fig. 1 & US 4969189 A        & EP 348812 A2 | 2,4,6,8 |
| A | Koichi Sakumoto et al, Public-Key Identification Schemes based on Multivariate Quadratic Polynomials, [online], 2011.08.18, [retrieval date 07 August 2012 (07.08.2012)], Internet <URL:http://www.iacr.org/cryptodb/archive/2011/CRYPTO/presentation/13-1-Sakumoto.pdf> | 1-10 |

Form PCT/ISA/210 (continuation of second sheet) (July 2009)

46

**INTERNATIONAL SEARCH REPORT**

International application No.

PCT/JP2012/068450

**Box No. II      Observations where certain claims were found unsearchable (Continuation of item 2 of first sheet)**

This international search report has not been established in respect of certain claims under Article 17(2)(a) for the following reasons:

1. ☒ Claims Nos.: 11-16
   because they relate to subject matter not required to be searched by this Authority, namely:
   Claims 11 to 16 pertain to scientific and mathematical theories themselves and thus relate to a subject matter on which this International Searching Authority is not required to carry out a search under the provisions of PCT Article 17(2)(a)(i) and PCT Rule 39.1.

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JACQUES PATARIN.** Asymmetric Cryptography with a Hidden Monomial. *CRYPTO,* 1996, 45-60

- QUARTZ, 128-Bit Long Digital Signatures. **PATARIN, J. ; COURTOIS, N. ; GOUBIN, L.** Topics in Cryptology - CT-RSA 2001. Lecture Notes in Computer Science, Springer-Verlag, April 2001, vol. 2020, 282-297